# EUROPEAN PATENT SPECIFICATION

(11) **EP 3 817 477 B1**
(45) Date of publication and mention of the grant of the patent: **10.07.2024**
(21) Application number: 19807383.5
(22) Date of filing: 24.05.2019
(51) Int. Cl.: H04L 1/1822, H04L 1/1829, H04L 1/1867, H04L 5/00

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 25.05.2018 CN 201810516343
(43) Date of publication of application: 05.05.2021
(73) Proprietor: Huawei Technologies Co., Ltd., Shenzhen, Guangdong 518129 (CN)
(72) Inventor: XIAO, Jiehua, Shenzhen, Guangdong 518129 (CN); PENG, Jinlin, Shenzhen, Guangdong 518129 (CN); TANG, Hao, Shenzhen, Guangdong 518129 (CN); TANG, Zhenfei, Shenzhen, Guangdong 518129 (CN)
(74) Representative: Maiwald GmbH
(86) International application number: PCT/CN2019/088346
(87) International publication number: WO 2019/223781

(56) References cited:
- WO-A1-2018/085145
- CATT: "Modeling Bandwidth Parts in MAC", vol. RAN WG2, no. Prague CZ; 20171009 - 20171013, 29 September 2017 (2017-09-29), XP051354824, Retrieved from the Internet <URL:http://www.3gpp.org/ftp/tsg_ran/WG2_RL2/TSGR2_99bis/Docs/> [retrieved on 20170929]
- SAMSUNG: "Wider Bandwidth Operations", vol. RAN WG1, no. Qingdao, P.R. China; 20170627 - 20170630, 26 June 2017 (2017-06-26), XP051299966, Retrieved from the Internet <URL:http://www.3gpp.org/ftp/Meetings_3GPP_SYNC/RAN1/Docs/> [retrieved on 20170626]
- CATT: "Replacing ?NR-UNITin MAC specification", vol. RAN WG2, no. Prague CZ; 20171009 - 20171013, 8 October 2017 (2017-10-08), XP051342339, Retrieved from the Internet <URL:http://www.3gpp.org/ftp/Meetings_3GPP_SYNC/RAN2/Docs/> [retrieved on 20171008]
- NTT DOCOMO: "Work plan for Rel-15 NR WI", 3GPP TSG RAN WG1 MEETING #90BIS, RL-1718177, 9 October 2017 (2017-10-09), Prague, CZ, XP051341359
- LG ELECTRONICS: "Summary of E-mail discussion on [99bis#43] [NR UP/MAC] Impact of BWP", 3GPP TSG-RAN WG2 MEETING #100, R2-1713879, 27 November 2017 (2017-11-27), Reno, USA, XP051372515

## Description

This application claims priority to Chinese Patent Application No. 201810516343.1, filed with the Chinese Patent Office on May 25, 2018 and entitled "COMMUNICATIONS METHOD AND APPARATUS".

### TECHNICAL FIELD

This application relates to the communications field, and more specifically, to a communications method, a computer-readable storage medium, and a computer program product.

### BACKGROUND

In a long term evolution (Long Term Evolution, LTE) system, a terminal needs to support an entire channel bandwidth (system bandwidth) of a cell to normally communicate with a network device. For example, an LTE terminal can communicate with an LTE cell in a channel bandwidth of 20 MHz only when the LTE terminal supports a receive bandwidth of at least 20 MHz. With development of communications systems, a bandwidth that can be supported by a network device rapidly increases. In a new radio (New Radio, NR) system, the network device can support a channel bandwidth of a maximum of 100 MHz in a frequency band lower than 6 GHz, and the network device can support a channel bandwidth of a maximum of 400 MHz in a frequency band higher than 6 GHz. However, an increase of a bandwidth capability supported by a terminal device is limited, and bandwidths supported by terminals of different types are also different. For example, some machine type communication (machine-type communication, MTC) terminals support only a very narrow channel bandwidth to meet requirements for energy saving and deep coverage, and a terminal that supports big data transmission usually supports a relatively wide channel bandwidth. Because bandwidth processing capabilities of the network device and the terminal device greatly differ, a bandwidth part (Bandwidth part, BWP) is introduced into the NR, and the terminal device may work in the bandwidth part.

In addition, channel bandwidths on a network side in an existing communications system include only several standard bandwidths. For example, a channel bandwidth of a cell in LTE may be 1.4 MHz, 3 MHz, 5 MHz, 10 MHz, 15 MHz or 20 MHz, and a channel bandwidth in NR may be 5 MHz, 10 MHz, 15 MHz, 20 MHz, 25 MHz, 30 MHz, or the like. For a relatively small bandwidth or a non-standard bandwidth, when a frequency resource of 1 MHz, 2 MHz, or the like is used, only a standard channel bandwidth that is less than a bandwidth of the frequency resource can be used in the existing communications system for communication. For example, only the channel bandwidth of 1.4 MHz is used for the frequency resource of 2 MHz. Alternatively, when a bandwidth resource is less than a minimum channel bandwidth, a frequency resource of 1 MHz or the like cannot be used for communication, and consequently, corresponding resource utilization is relatively low. Therefore, in 5G communications, as a data volume increases and frequency resources are fragmented and separated, data transmission efficiency urgently needs to be improved.

In CATT: "Modeling Bandwidth Parts in MAC", 3GPP DRAFT; R2-1710274, 3RD GENERATION PARTNERSHIP PROJECT (3GPP), MOBILE COMPETENCE CENTRE; 650; ROUTE DES LUCIOLES; F-06921 SOPHIA-ANTIPOLIS CEDEX; FRANCE, vol. RAN WG2, no. Prague CZ 20171009-20171013, the modeling aspects of Bandwidth Parts (BWPs) in MAC, especially realted to the HARQ entity has been addressed.

In SAMSUNG: "Wider Bandwidth Operations", 3GPP DRAFT; R1-1710761, 3RD GENERATION PARTNERSHIP PROJECT (3GPP), MOBILE COMPETENCE CENTRE; 650; ROUTE DES LUCIOLES; F-06921 SOPHIA-ANTIPOLIS CEDEX; FRANCE, vol. RAN WG1, no. Qingdao, P.R. China; 20170627-20170630, wider bandwidth operations have been discussed.

CATT: "Replacing "NR-UNIT" in MAC specification", 3GPP DRAFT; R2-1710291, 3RD GENERATION PARTNERSHIP PROJECT (3GPP), MOBILE COMPETENCE CENTRE; 650; ROUTE DES LUCIOLES; F-06921 SOPHIA-ANTIPOLIS CEDEX; FRANCE, vol. RAN WG2, no. Prague CZ 20171009-20171013, addresses each MAC procedure currently involving one or more instances of "NR-UNIT" and proposes an appropriate replacement.

### SUMMARY

This application provides a method and apparatus, to improve signal transmission efficiency. The invention is defined by the appended claims.

According to a first aspect of the present invention, a communication method is provided. The method includes: receiving first indication information, where the first indication information is used to indicate M bandwidth parts located in one cell that are configured for a terminal device, and N of the M bandwidth parts are active within a same time period, where M≥2, 2≤N≤M, and M and N are positive integers; and communicating with a network device in the N bandwidth parts.

The terminal device receives the first indication information used to indicate the M bandwidth parts located in one cell that are configured for the terminal device, and the N of the M bandwidth parts are active within the same time period, where N is greater than or equal to 2. In other words, the terminal device can simultaneously communicate with the network device in more than one bandwidth part, and can further make full use of a discrete resource or a non-standard bandwidth spectrum, thereby improving signal transmission efficiency.

According to the first aspect of the present invention, N bandwidth part groups include the M bandwidth parts and d at least one of the N bandwidth part groups comprises two or more bandwidth parts, and each one of the N active bandwidth parts is located in a different bandwidth part group of the N bandwidth part groups.

The M bandwidth parts are divided into the N bandwidth part groups in total, and one bandwidth part belongs to only one bandwidth part group. In other words, that the M bandwidth parts include the N bandwidth part groups may be that the M bandwidth parts are divided into the N bandwidth part groups, and different bandwidth part groups do not include a same bandwidth part. In other words, each of the M bandwidth parts can be allocated to one bandwidth part group, and one bandwidth part does not belong to two bandwidth part groups.

In some possible implementations of the present invention, the method further includes: obtaining a maximum value P of a quantity of HARQ processes supported by the terminal device in one HARQ entity; and determining, based on P and the quantity N of HARQ entities, a maximum value of a quantity of HARQ processes supported by the terminal device in the N bandwidth parts.

The maximum value, obtained by the terminal device, of the quantity of HARQ processes supported by the terminal device is the same as a maximum value, obtained in a conventional solution, of quantity of HARQ the same time period, where N is greater than or equal to 2. In other words, the terminal device can simultaneously communicate with the network device in more than one bandwidth part, and can further make full use of a discrete resource or a non-standard bandwidth spectrum, thereby improving signal transmission efficiency.

In some possible implementations, any one of the M bandwidth parts is associated with a bandwidth part group.

In some possible implementations, N bandwidth part groups include the M bandwidth parts, and any one of the N bandwidth parts is located in different bandwidth part groups in the N bandwidth part groups.

The M bandwidth parts are divided into the N bandwidth part groups in total, and one bandwidth part belongs to only one bandwidth part group. In other words, that the M bandwidth parts include the N bandwidth part groups may be that the M bandwidth parts are divided into the N bandwidth part groups, and different bandwidth part groups do not include a same bandwidth part. In other words, each of the M bandwidth parts can be allocated to one bandwidth part group, and one bandwidth part does not belong to two bandwidth part groups.

In some possible implementations, any one of the N bandwidth part groups is associated with a HARQ entity.

One of the N bandwidth part groups may be associated with a HARQ entity, or each of the N bandwidth processes supported by the terminal device. To be specific, in this embodiment of this application, data transmission efficiency can be improved while the conventional solution is compatible.

In some possible implementations of the present invention, the method further includes: obtaining a maximum value of a quantity of HARQ processes supported by the terminal device in the N bandwidth parts.

The terminal device may directly obtain the maximum value of the quantity of HARQ processes supported by the terminal device in the N bandwidth parts, thereby reducing power consumption of the terminal device.

In some possible implementations of the present invention, signals transmitted in at least two of the N bandwidth parts are associated with a same TB.

One TB in one cell may be mapped to different active bandwidth parts for transmission. To be specific, signals of different code blocks in data of one TB are separated to different BWPs for transmission. In this way, independent HARQ feedback and data retransmission of each code block can be implemented in this embodiment of this application.

In some possible implementations of the present invention, a signal sent in the first bandwidth part of the N bandwidth parts is associated with a first TB, a signal sent in a second bandwidth part of the N bandwidth parts is associated with a second TB, and the first bandwidth part and the second bandwidth part are different.

The terminal device may transmit, in the N bandwidth parts, signals associated with different TBs, to further improve the signal transmission efficiency.

In some possible implementations of the present invention, the method further includes: receiving second indication information, where the second indication information is used to indicate the terminal device to transmit the first TB in the first bandwidth part, and transmit the second TB in the second bandwidth part.

The terminal device can learn, after receiving the second indication information, the bandwidth part in which the first TB is to be transmitted and the bandwidth part in which the second TB is to be transmitted, thereby reducing signaling overheads.

According to a second aspect of the present invention, a communication method is provided. The method includes: sending first indication information, where the first indication information is used to indicate M bandwidth parts located in one cell that are configured for a terminal device, and N of the M bandwidth parts are active within a same time period, where M≥2, 2≤N≤M, and M and N are positive integers; and communicating with a terminal device in the N bandwidth parts.

The network device sends the first indication information used to indicate the M bandwidth parts located in one cell that are configured for the terminal device, and the N of the M bandwidth parts are active within the same time period, where N is greater than or equal to 2. In other words, the network device can simultaneously communicate with the terminal device in more than one bandwidth part, thereby improving signal transmission efficiency.

According to the second aspect of the present invention, N bandwidth part groups include the M bandwidth parts and at least one of the N bandwidth part groups comprises two or more bandwidth parts, and each one of the N active bandwidth parts is located in a different bandwidth part group of the N bandwidth part groups.

In some possible implementations of the present invention, the method further includes: sending a maximum value P of a quantity of HARQ processes supported by the terminal device in one HARQ entity.

The maximum value, sent by the network device, of the quantity of HARQ processes supported by the terminal device is the same as a maximum value, sent in a conventional solution, of data of HARQ processes supported by the terminal device. To be specific, in this embodiment of this application, data transmission efficiency can be improved while the conventional solution is compatible.

In some possible implementations of the present invention, the method further includes: determining, based on a maximum value P of a quantity of HARQ processes supported by the terminal device in one HARQ entity and the quantity N of HARQ entities associated with the N bandwidth part groups, a maximum value of a quantity of HARQ processes supported by the terminal device in the N bandwidth parts; and sending the maximum value of the quantity of HARQ processes supported by the terminal device in the N bandwidth parts.

The network device may calculate the maximum value of the quantity of HARQ processes supported by the terminal device in the N bandwidth parts, and send the maximum value to the terminal device, so that the terminal device does not need to perform calculation, thereby reducing power consumption of the terminal device.

In some possible implementations of the present invention, signals transmitted in at least two of the N bandwidth parts are associated with a same TB.

A plurality of signals associated with one TB may be transmitted in different bandwidth parts, so that partial feedback can be implemented, thereby reducing retransmission overheads.

In some possible implementations of the present invention, a signal sent in the first bandwidth part of the N bandwidth parts is associated with a first TB, a signal sent in a second bandwidth part of the N bandwidth parts is associated with a second TB, and the first bandwidth part and the second bandwidth part are different.

In some possible implementations of the present invention, the method further includes: receiving second indication information, where the second indication information is used to indicate the terminal device to transmit the first TB in the first bandwidth part, and transmit the second TB in the second bandwidth part.

According to a third aspect of the present invention, a computer storage medium is provided. The computer storage medium stores program code, and the program code is used to indicate an instruction for performing the method according to any one of the first aspect, or the second aspect, or the possible implementations of the first aspect or the second aspect.

According to a fourth aspect of the present invention, a computer program product including an instruction is provided. When the computer program product is run on a computer, the computer performs the method according to any one of the first aspect, or the second aspect, or the possible implementations of the first aspect or the second aspect.

Based on the foregoing solutions, the terminal device receives the first indication information used to indicate the M bandwidth parts located in one cell that are configured for the terminal device, and the N of the M bandwidth parts are active within the same time period, where N is greater than or equal to 2. In other words, the terminal device can simultaneously communicate with the network device in more than one bandwidth part, thereby improving signal transmission efficiency.

### BRIEF DESCRIPTION OF DRAWINGS

FIG. 1 is a schematic diagram of a communications system;
FIG. 2 is a schematic diagram of an application scenario;
FIG. 3 is a schematic diagram of generating a carrier;
FIG. 4 is a schematic diagram of a bandwidth part;
FIG. 5 is a schematic diagram of a HARQ process supported by a terminal device;
FIG. 6 is a schematic diagram of another application scenario;
FIG. 7 is a schematic flowchart of a communication method;
FIG. 8 is a schematic diagram of a communication method;
FIG. 9 is a schematic diagram of a communication method;
FIG. 10 is a schematic diagram of a communication method;
FIG. 11 is a schematic diagram of a communication method;
FIG. 12 is a schematic diagram of a communication method;
FIG. 13 is a schematic diagram of a communication method;
FIG. 14 is a schematic diagram of a communication method;
FIG. 15 is a schematic diagram of a communication method;
FIG. 16 is a schematic structural diagram of a bandwidth part;
FIG. 17 is a schematic block diagram of a communications apparatus;
FIG. 18 is a schematic structural diagram of a communications apparatus;
FIG. 19 is a schematic block diagram of a communications apparatus;
FIG. 20 is a schematic structural diagram of a communications apparatus; and
FIG. 21 is a schematic block diagram of a communications apparatus.

### DESCRIPTION OF EMBODIMENTS

The following describes the technical solutions of this application with reference to the accompanying drawings.

The technical solutions of the embodiments of this application may be applied to various communications systems, such as a global system for mobile communications (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunication System, UMTS), a worldwide interoperability for microwave access (Worldwide Interoperability for Microwave Access, WiMAX) communications system, and a 5th generation (5th Generation, 5G) system or a new radio (New Radio, NR) system.

A terminal device in the embodiments of this application may be user equipment, an access terminal, a subscriber unit, a subscriber station, a mobile station, a remote station, a remote terminal, a mobile device, a user terminal, a terminal, a wireless communications device, a user agent, or a user apparatus. Alternatively, the terminal device may be a cellular phone, a cordless telephone set, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a future 5G network, a terminal device in a future evolved public land mobile network (Public Land Mobile Network, PLMN), or the like. This is not limited in the embodiments of this application.

A network device in the embodiments of this application may be a device configured to communicate with the terminal device. The network device may be a base transceiver station (Base Transceiver Station, BTS) in a global system for mobile communications (Global System of Mobile communication, GSM) system or a code division multiple access (Code Division Multiple Access, CDMA) system, may be a NodeB (NodeB, NB) in a wideband code division multiple access (Wideband Code Division Multiple Access, WCDMA) system, may be an evolved NodeB (Evolutional NodeB, eNB or eNodeB) in an LTE system, or may be a radio controller in a cloud radio access network (Cloud Radio Access Network, CRAN) scenario. Alternatively, the network device may be a relay node, an access point, a vehicle-mounted device, a wearable device, a network device in a future 5G network, a network device in a future evolved PLMN, or the like. This is not limited in the embodiments of this application.

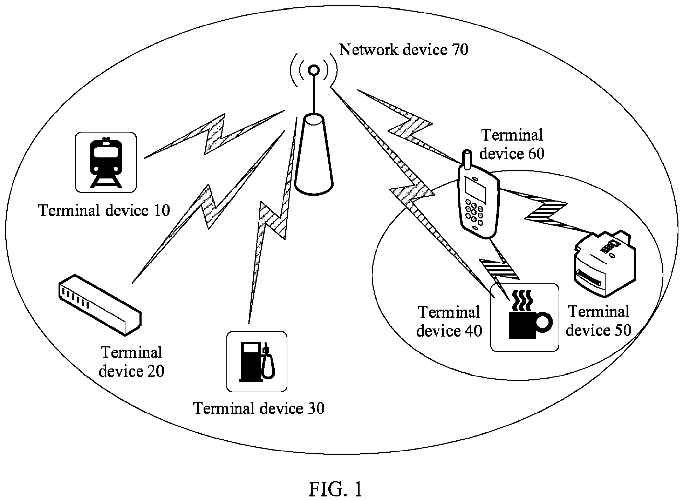

FIG. 1 is a schematic diagram of a communications system. The communications system in FIG. 1 may include at least one terminal device (for example, a terminal device 10, a terminal device 20, a terminal device 30, a terminal device 40, a terminal device 50, and a terminal device 60) and a network device 70. The network device 70 is configured to provide a communications service for the terminal device and enable the terminal device to access a core network. The terminal device may access a network by searching for a synchronization signal, a broadcast signal, or the like sent by the network device 70, to communicate with the network. The terminal device 10, the terminal device 20, the terminal device 30, the terminal device 40, and the terminal device 60 in FIG. 1 may perform uplink and downlink transmission with the network device 70. For example, the network device 70 may send downlink signals to the terminal device 10, the terminal device 20, the terminal device 30, the terminal device 40, and the terminal device 60, or may receive uplink signals sent by the terminal device 10, the terminal device 20, the terminal device 30, the terminal device 40, and the terminal device 60.

In addition, the terminal device 40, the terminal device 50, and the terminal device 60 may also be considered as a communications system. The terminal device 60 may send downlink signals to the terminal device 40 and the terminal device 50, or may receive uplink signals sent by the terminal device 40 and the terminal device 50.

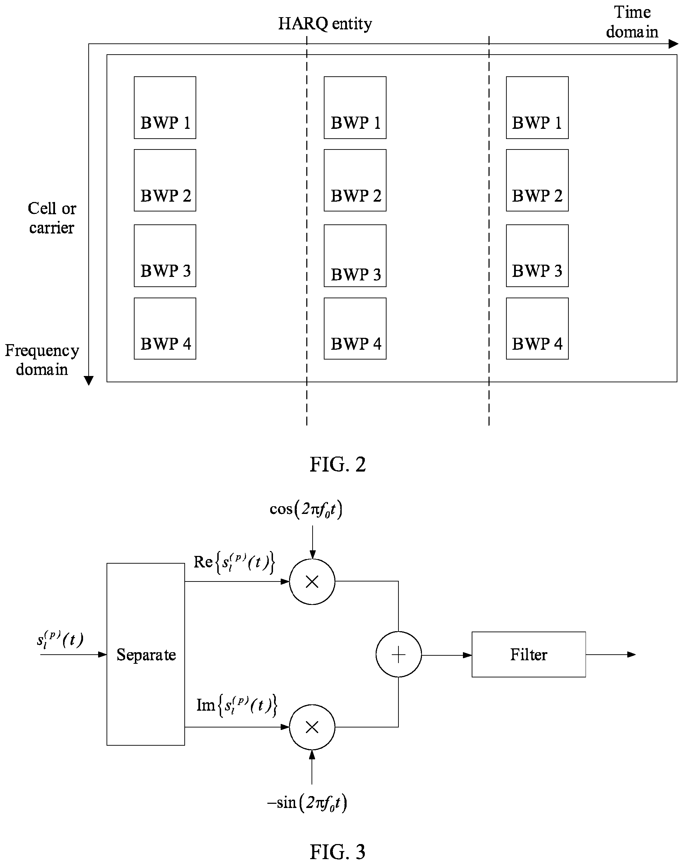

FIG. 2 is a schematic diagram of an application scenario. As shown in FIG. 2, a cell corresponds to a carrier and a hybrid automatic repeat request (Hybrid automatic repeat request, HARQ) entity, and the carrier includes four bandwidth parts: a BWP 1, a BWP 2, a BWP 3, and a BWP 4.

It should be noted that, the cell is described from a perspective of a high layer and also from a perspective of resource management, mobility management, or a serving unit. Coverage of each network device may be divided into one or more serving cells, and the serving cell may be considered to include a frequency domain resource. In other words, one serving cell may include a carrier.

It should be understood that, the "cell" in the embodiments of this application may be a "serving cell".

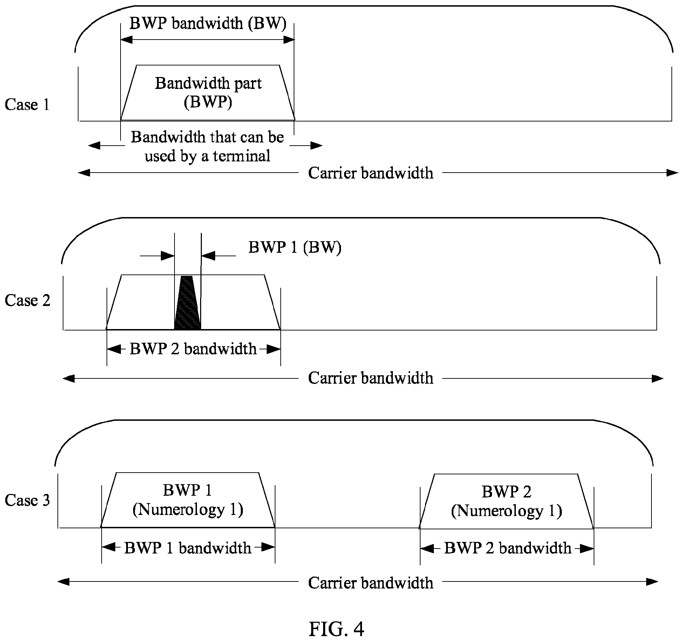

The concept of carrier is described from a perspective of signal generation at a physical layer. For example, as shown in FIG. 3, a carrier is a signal generated at a center frequency f₀. For example, as shown in FIG. 4, a bandwidth part is a group of consecutive resource blocks (resource block, RB) on a carrier. Different BWPs may occupy frequency domain resources that partially overlap each other, or may occupy completely different frequency resources. Different numerologies (Numerology) may be used for different BWPs.

The numerology is a parameter used in a communications system. The communications system (for example, 5G) may support a plurality of numerologies. The numerology may be defined by using one or more of the following parameter information: a subcarrier spacing, a cyclic prefix (cyclic prefix, CP), a time unit, a bandwidth, and the like. For example, the numerology may be defined by using the subcarrier spacing and the CP.

The subcarrier spacing may be an integer greater than or equal to 0. For example, the subcarrier spacing may be 15 kHz, 30 kHz, 60 kHz, 120 kHz, 240 kHz, 480 kHz, or the like. For example, different subcarrier spacings may be integer multiples of 2. It can be understood that the subcarrier spacing may be alternatively designed to another value.

The CP may include a length of the CP and/or a type of the CP. For example, the CP may be a normal CP (normal CP, NCP) or an extended CP (extended CP, ECP).

The time unit is used to represent a time unit in time domain, and may be, for example, a sampling point, a symbol, a mini-slot, a slot, a subframe, or a radio frame. Information about the time unit may include a type, a length, a structure, or the like of the time unit.

The bandwidth (bandwidth) may be a segment of resources that are consecutive in frequency domain. Sometimes, the bandwidth may be referred to as a bandwidth part (bandwidth part, BWP), a carrier bandwidth part (carrier bandwidth part), a subband (subband) bandwidth, a narrowband (narrowband) bandwidth, or another name. The name is not limited in this application.

For example, one BWP includes K (K>0) consecutive subcarriers. Alternatively, one BWP is a frequency domain resource on which N non-overlapping consecutive resource blocks (resource block, RB) are located, where a subcarrier spacing of the RB may be 15 kHz, 30 kHz, 60 kHz, 120 kHz, 240 kHz, 480 kHz, or another value. Alternatively, one BWP is a frequency domain resource on which M non-overlapping consecutive resource block groups (resource block group, RBG) are located, where one RBG includes P consecutive RBs, and a subcarrier spacing of the RB may be 15 kHz, 30 kHz, 60 kHz, 120 kHz, 240 kHz, 480 kHz, or another value, for example, an integer multiple of 2.

A HARQ entity is a module that maintains a HARQ process, and one HARQ entity can manage and maintain a plurality of HARQ processes. A stop-and-wait protocol (stop-and-wait protocol) is used in the HARQ process to send data. Specifically, after sending an information block through a first HARQ process, a transmit end waits for feedback information, and a receive end sends feedback information to indicate a positive (ACK) or negative (NACK) receiving state of the information block. When stopping to wait for the feedback information after sending the information block through the first HARQ process, the transmit end may further send an information block through a second HARQ process. In this way, when waiting for the feedback information, the transmit end can send information through a plurality of different HARQ processes, and a set including the HARQ processes is maintained by a HARQ entity. In other words, continuous transmission of information is implemented in combination of the HARQ entity and the stop-and-wait protocol.

The information block may be information generated from a transport block (Transport Block, TB), or may be information less than or greater than a TB. For ease of description, the information block may alternatively directly correspond to a TB, or directly correspond to information less than or greater than a TB. This correspondence may also be referred to as association. Using a case in which one information block is associated with one TB as an example, an information block is data generated after encoding a TB. The encoding may include code block (code block, CB) segmentation, main encoding, rate matching after the encoding, and the like. The main coding may be polar (Polar) encoding, low density parity check (Low density parity check, LDPC) encoding, convolutional encoding, turbo encoding (TURBO), or the like.

The HARQ entity transfers received HARQ information and an associated transport block to a corresponding HARQ process. The HARQ information includes new data indicator (New Data Indicator, NDI) information, transport block size (Transport Block size, TBS) information, redundancy version (Redundancy Version, RV) information, HARQ process number information, and the like. The HARQ entity further identifies a HARQ process number in an uplink grant, obtains information from a buffer of an upper layer (for example, a media access control (Media Access Control, MAC) layer), and transfers the information and related HARQ information to the identified HARQ process, to notify the identified HARQ process to trigger a new transmission or a retransmission.

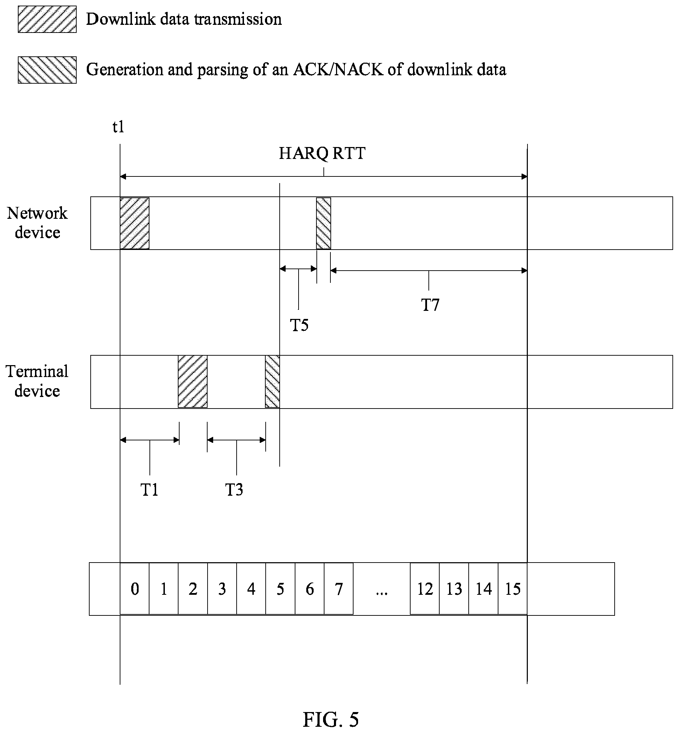

More specifically, after sending data through a HARQ process, the network device needs to wait for a HARQ round-trip time (Round-Trip Time, RTT) before sending data through the HARQ process again. The HARQ RTT is related to a data transmission delay, a processing delay of the terminal device, and a processing delay of the network device. During the HARQ RTT, the network device may further send data through another HARQ process. For example, as shown in FIG. 5, during a HARQ RTT, the network device sends data at a moment t1, the terminal device receives the data after a downlink transmission time T1 of the data, a time of processing (including data decoding and feedback information generation) the received data is T3, a transmission time of sending the processed data to the network device is T5, and a processing time of the network device is T7. During the HARQ RTT, the network device may further transmit information through another different HARQ process (where for example, 16 HARQ processes may be used to transmit information during the RTT shown in FIG. 5, and numbers of the HARQ processes are 0 to 15).

It should be noted that, each HARQ process has an independent HARQ buffer (buffer), to perform soft combination on received data or buffer sent data.

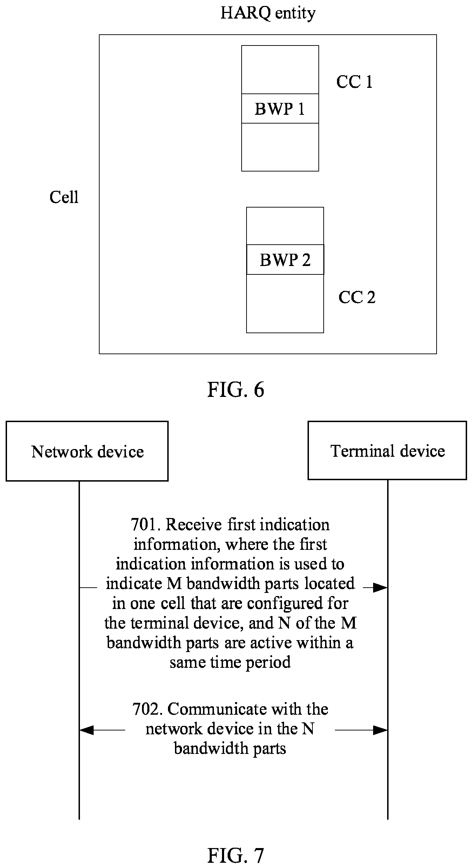

FIG. 6 shows another application scenario. As shown in FIG. 6, one cell may include a plurality of carriers (where in the figure, only two carriers are used as an example), and each carrier may include one or more bandwidth parts.

It should be noted that, the embodiments of this application may be further applied to a scenario in which one cell includes a plurality of carriers. This is not limited in this application. In addition, when a serving cell includes at least two carriers, the carrier may also be referred to as a "component carrier (CC)".

Optionally, each carrier may include an uplink resource and a downlink resource, or include only an uplink resource, or include only a downlink resource. In other words, one cell may include a plurality of downlink carriers and a plurality of uplink carriers, and a quantity of uplink carriers and a quantity of downlink carriers may be different. This is not limited in the embodiments of this application.

In a conventional solution, a terminal device works in one time unit through one hybrid automatic repeat request (Hybrid automatic repeat request, HARQ) process (process). In this case, a bandwidth part corresponding to the HARQ process is in an active state. However, as a data volume increases and a discrete resource or a non-standard bandwidth spectrum is used, data transmission efficiency urgently needs to be improved.

FIG. 7 is a schematic flowchart of a communication transmission method.

701. Receive first indication information, where the first indication information is used to indicate M bandwidth parts that are configured for a terminal device, and N of the M bandwidth parts are active within a same time period. Correspondingly, a network device sends the first indication information.

702. Communicate with the network device in the N bandwidth parts.

Optionally, step 701 and step 702 may be performed by the terminal device.

Specifically, the time period may be a given time period, for example, a time period agreed on by the network device and the terminal device, or a time period configured by the network device. The active bandwidth part may be a bandwidth part that can be used to communicate with the network device.

It should be noted that, the time period in this embodiment of this application may be a time unit, that is, a subframe, a mini-subframe, a slot, a mini-slot, an orthogonal frequency division multiplexing (Orthogonal Frequency Division Multiplexing, OFDM) symbol, a time unit smaller than an OFDM symbol, or a time unit larger than a subframe. This is not limited in this application.

It should be understood that, any two of the M bandwidth parts in this embodiment of this application may be inconsecutive in frequency, or may partially overlap in frequency.

It should be further understood that, when a bandwidth part is active, the bandwidth part may be referred to as an "active bandwidth part". This is not distinguished in the following embodiments.

Optionally, HARQ processes used for communication in different bandwidth parts are different.

Optionally, the network device may determine the first indication information based on a capability of a terminal, and send the first indication information to the terminal device.

Specifically, the network device may select a frequency band from a carrier based on a bandwidth processing capability supported by the terminal, and determine the M bandwidth parts in the frequency band and the N active bandwidth parts in the M bandwidth parts, thereby improving flexibility of configuring bandwidth parts by the network device for the terminal device.

Optionally, any one of the M bandwidth parts is associated with a bandwidth part group.

Specifically, a bandwidth part in the M bandwidth parts may be associated with a bandwidth part group, or each of the M bandwidth parts is associated with a bandwidth part group.

Optionally, there may be one or more associated bandwidth part groups.

Optionally, one of the M bandwidth parts is associated with one bandwidth part group. Optionally, each of the M bandwidth parts is associated with one bandwidth part group. One bandwidth part is not associated with a plurality of bandwidth part groups.

Specifically, a bandwidth part group may include at least one bandwidth part, and there may be an association relationship between each of the M bandwidth parts and the at least one bandwidth part in the bandwidth part group. Alternatively, each of the M bandwidth parts is allocated to at least one bandwidth part group. Alternatively, each of the M bandwidth parts is allocated to only one bandwidth part group.

N bandwidth part groups include the M bandwidth parts, and each one of the N active bandwidth parts is located in a different bandwidth part group of the N bandwidth part groups.

Specifically, the M bandwidth parts are divided into the N bandwidth part groups in total, and one bandwidth part belongs to only one bandwidth part group. In other words, that the M bandwidth parts include the N bandwidth part groups may be that the M bandwidth parts are divided into the N bandwidth part groups, and different bandwidth part groups do not include a same bandwidth part. In other words, each of the M bandwidth parts can be allocated to one bandwidth part group, and one bandwidth part does not belong to two bandwidth part groups.

Optionally, one bandwidth part is activated in each bandwidth part group.

It should be understood that, the activated bandwidth part may also be referred to as an "active bandwidth part".

It should be understood that, the N bandwidth part groups may further include, aside from the M bandwidth parts, a bandwidth part other than the M bandwidth parts.

It should be noted that, the network device may obtain bandwidth part groups through division and indicate the bandwidth part groups to the terminal device, or may be agreed on by the terminal device and the network device in advance. This is not limited in this application. When the bandwidth part groups are configured by the network device, the network device may first obtain the bandwidth part groups through division, and then activate one bandwidth part in each bandwidth part group. Alternatively, a first active bandwidth part in a bandwidth part group may be configured when the bandwidth part groups are configured, and configuration of the bandwidth part groups and activation of one bandwidth part in each bandwidth part group are completed at one time. Optionally, an available bandwidth part group may alternatively be activated in an independent activation process of a bandwidth part group.

Optionally, the first indication information includes N bandwidth part group identities (namely, BWP group IDs) and a bandwidth part identity (namely, BWP ID) corresponding to each bandwidth part. To distinguish between the bandwidth part groups, each bandwidth part group may be identified by using a bandwidth part group identity (Identity, ID). In other words, the bandwidth part groups are numbered. The bandwidth part group identities may be sequentially numbered from 0 to N-1. N is the quantity of bandwidth part groups.

**Table 1**

| Quantity of configured BWPs | BWP number | BWP group ID | BWP ID numbered in one group | Grouped BWP ID |
|---|---|---|---|---|
| 4 | 1 | 0 | 0 | 0 |
| | 2 | 0 | 1 | 1 |
| | 3 | 1 | 2 | 0 |
| | 4 | 1 | 3 | 1 |

Specifically, as shown in Table 1, the network device configures four BWPs for the terminal, where the four BWPs are respectively a BWP 1, a BWP 2, a BWP 3, and a BWP 4 (as shown in the second column in Table 1). The network device first numbers the configured BWPs in one group, where the four BWPs respectively correspond to a BWP ID=0, a BWP ID=1, a BWP ID=2 and a BWP ID=3 (as correspondingly shown in the fourth column in Table 1); and then groups the BWPs based on the BWP IDs numbered in one group. In Table 1, the four BWPs are divided into two groups that respectively correspond to a group whose BWP group ID=0 and a group whose BWP group ID=1. The BWP group whose BWP group ID=0 includes two BWPs: the BWP whose BWP ID=0 and the BWP whose BWP ID=1. The BWP group whose BWP group ID=1 includes two BWPs: the BWP whose BWP ID=2 and the BWP whose BWP ID=3.

Optionally, in another numbering method, as shown in Table 1, the network device configures four BWPs for the terminal, where the four BWPs are respectively a BWP 1, a BWP 2, a BWP 3, and a BWP 4 (as shown in the second column in the table). The network device first numbers the configured BWPs in one group, where the four BWPs respectively correspond to a BWP ID=0, a BWP ID=1, a BWP ID=2 and a BWP ID=3 (as correspondingly shown in the fourth column in the table). In addition, the network device divides the configured BWPs into two groups, and bandwidth parts in each bandwidth part group may be independently numbered. For example, a BWP group whose BWP group ID=0 includes two BWPs: a BWP whose BWP ID=0 and a BWP whose BWP ID=1. A BWP group whose BWP group ID=1 also includes two BWPs: a BWP whose BWP ID=0 and a BWP whose BWP ID=1 (as shown in the last column in the table). The terminal obtains BWP IDs numbered in one group through calculation based on the BWP group IDs and the independent BWP IDs in each group, to obtain a relationship between a BWP in a BWP group and a configured BWP. For example, a BWP ID, numbered in one group, corresponding to both the BWP group ID=0 and the grouped BWP ID=0=the BWP group ID*N+the grouped BWP ID=0*2+0=0; and a BWP ID, numbered in one group, corresponding to both the BWP group ID=1 and the grouped BWP ID=1 =the BWP group ID)*N+the grouped BWP ID=1*2+1=3, where N is a quantity of bandwidth part groups.

Optionally, the network device sends grouping indication information to the terminal device based on the numbering manners of both the BWP group IDs and the BWP group IDs. The grouping indication information may be sent through RRC signaling or dynamic signaling.

Optionally, when the foregoing BWP IDs numbered in one group are used to group the bandwidth parts, specifically, using indication of downlink bandwidth part group information as an example, configuration information of each bandwidth part group may include the following information elements:

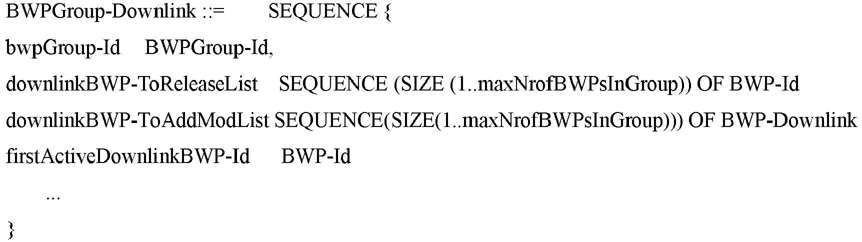

SEQUENCE indicates that configuration of a bandwidth part group needs to include at least one of a series of parameter information in the brackets. The first parameter is an ID of the bandwidth part group (namely, a BWP group ID), the second parameter means removing at least one bandwidth part from the bandwidth part group, the third parameter means adding at least one bandwidth part to the bandwidth part group, and the fourth parameter means configuring a first active bandwidth part. BWP-Downlink is configuration information of a downlink bandwidth part, and includes an ID of the bandwidth part (BWP ID) and other configuration information. The first active bandwidth part indicates that for each bandwidth part group, a first active bandwidth part is defined in the group when the bandwidth part group is configured. Information about the second and third parameters is used to provide information for change of composition of the bandwidth part group. In the foregoing information, BWP-Id is equivalent to the foregoing BWP ID numbered in one group.

After information about each bandwidth part group is determined, a bandwidth part group serving the terminal device may be configured in a serving cell for the terminal device. Configuration information of the bandwidth part group may include the following information elements:

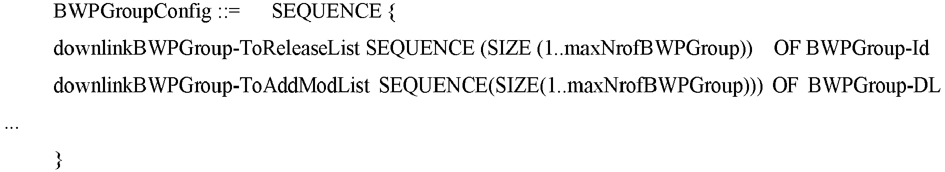

The first parameter means deleting at least one original bandwidth part group from bandwidth part groups serving the terminal, and the second parameter means adding at least one new bandwidth part group to the existing serving bandwidth part groups. When completing configuring the bandwidth part group for the terminal, the network device further completes a process of activating a bandwidth part in the bandwidth part group by using a first active bandwidth part in the bandwidth part group. Therefore, the terminal may communicate with a network device by using the first active bandwidth part in the bandwidth part group. The BWP group ID in the foregoing information is equivalent to a foregoing BWP group IDs numbered in one group. For example, as shown in Table 1, the network device configures the bandwidth part group 0 and the bandwidth part group 1 for the terminal. The bandwidth part group 0 (that is, the bandwidth part group whose BWP group ID=0) includes two bandwidth parts: the bandwidth part whose BWP ID=0 and the bandwidth part whose BWP ID=1, and a first active bandwidth part is the bandwidth part whose BWP ID=0. The bandwidth part group 1 (that is, the bandwidth part group whose BWP group ID=1) includes two bandwidth parts: the bandwidth part whose BWP ID=2 and the bandwidth part whose BWP ID=3, and a first active bandwidth part is the bandwidth part whose BWP ID=2. After the network device sends such bandwidth part group information to the terminal, it is determined by default that the bandwidth part whose BWP ID=0 in the bandwidth part group 0 and the bandwidth part whose BWP ID=2 in the bandwidth part group 1 are activated, so that the terminal can communicate with the network device in the two bandwidth parts.

Specifically, the network device may obtain bandwidth part groups through division based on grouping indication information, and after sending the grouping indication information to the terminal device, the network device further sends the first indication information to activate an active bandwidth part in each group.

It should be understood that, the active bandwidth part may be referred to as a "first active bandwidth part (first active BWP)".

Optionally, after configuring the bandwidth part groups and the first active bandwidth part in each bandwidth part group for the terminal, the network device does not activate the configured bandwidth part groups and the first active bandwidth parts in the corresponding groups by default. In other words, before the terminal uses the bandwidth parts in the configured bandwidth part groups, an activation process of the bandwidth part groups is further needed. For example, as shown in Table 1, the network device configures the bandwidth part group 0 and the bandwidth part group 1 for the terminal. The bandwidth part group 0 (that is, the bandwidth part group whose BWP group ID=0) includes two bandwidth parts: the bandwidth part whose BWP ID=0 and the bandwidth part whose BWP ID=2, and a first active bandwidth part is the bandwidth part whose BWP ID=0. The bandwidth part group 1 (that is, the bandwidth part group whose BWP group ID=1) includes two bandwidth parts: the bandwidth part whose BWP ID=2 and the bandwidth part whose BWP ID=3, and a first active bandwidth part is the bandwidth part whose BWP ID=2. In this case, an activation process of the bandwidth parts is not completed, and other information is needed to notify the terminal whether to activate the configured bandwidth part groups. If a corresponding bandwidth part group is activated, it indicates that a first active bandwidth part in the bandwidth part group is activated. After completing the configuration of the bandwidth part groups and the first active bandwidth parts in the groups, the network device may further notify, by using radio resource control (Radio Resource Control, RRC) signaling, media access control control element (Media Access Control Control Element, MAC-CE) signaling, or dynamic control information, the to-be-activated bandwidth part groups to the terminal. In the foregoing example, if the network device indicates, by using activation information, the terminal to activate the bandwidth part group 0 and the bandwidth part group 1, it indicates that the first active bandwidth parts in both the groups are activated at the same time. That is, the bandwidth part whose BWP ID=0 in the bandwidth part group 0 and the bandwidth part whose BWP ID=2 in the bandwidth part group 1 are activated. In this case, the terminal may communicate with the network device in the two bandwidth parts. If only one of the bandwidth part groups is activated, it indicates that a first active bandwidth part in the only one bandwidth part group is activated.

In addition, different bandwidth part groups may be distinguished by detecting different types of data by the terminal. For example, if the terminal needs to listen to a system message only in a downlink bandwidth part group, the bandwidth part group may be referred to as a primary bandwidth part group (Primary BWP Group), and a bandwidth part group in which the terminal does not need to listen to a system message may be referred to as a secondary bandwidth part group (Secondary BWP Group). Behavior of the terminal in the primary bandwidth part group and behavior of the terminal in the secondary bandwidth part group are different. Optionally, the primary bandwidth part group may always be in an activated state, and the secondary bandwidth part group may be activated or deactivated.

Optionally, when the terminal device is switched from an active bandwidth part in the bandwidth part group to another bandwidth part, data retransmission between bandwidth parts in the bandwidth part group can be supported. In other words, data retransmission can be performed between bandwidth parts in which a same HARQ process is used. However, data transmission or retransmission across bandwidth groups is not allowed.

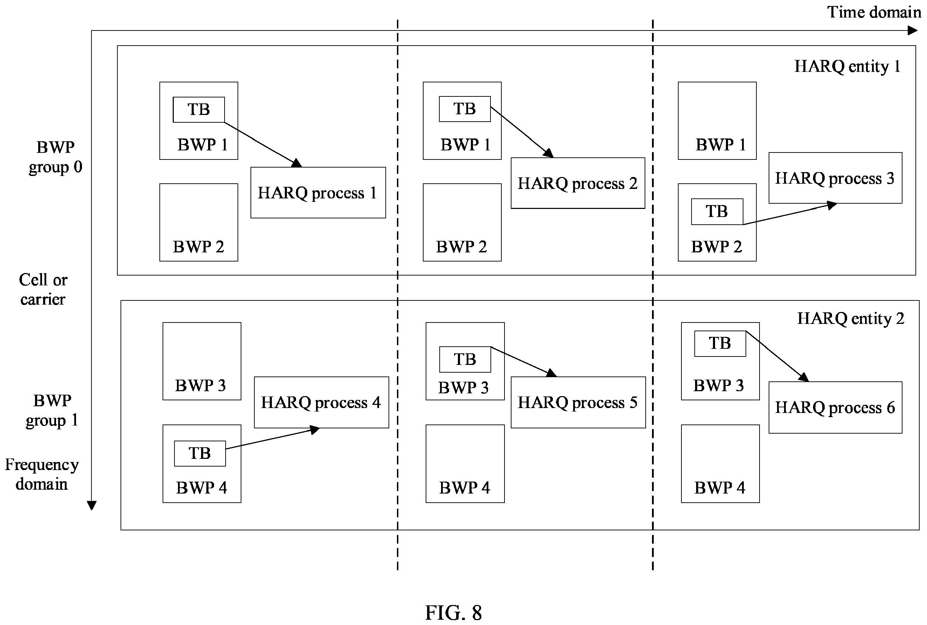

For example, as shown in FIG. 8, in a bandwidth part group 0, data initial transmission is performed on a TB 1 in a BWP 1 through a HARQ process 1. After the initial transmission, if an active bandwidth part is switched from the BWP 1 to a BWP 2, retransmission may be performed on the TB 1 in the BWP2 through the HARQ process 1.

It should be noted that, to satisfy a requirement that data retransmission can be performed between bandwidth parts in a bandwidth part group, bandwidth parts between which data retransmission can be performed may be grouped into one group when the bandwidth part group is obtained through division.

Optionally, bandwidth parts used to transmit data of a same type may be in one bandwidth part group.

Specifically, the data of the same type may be data for which a same numerology is used, for example, may be data all transmitted in a 15kHz subcarrier spacing (Subcarrier Spacing, SCS). Alternatively, the data of the same type is data on a same transmission link. For example, the same transmission link may be a sidelink (sidelink) in device-to-device communication (Device-to-Device Communication, D2D) or vehicle-to-X (Vehicle to X, V2X) communication, where X may represent any person or object, or a backhaul link (backhaul link, BH) in integrated access and backhaul (Integrated Access and Backhaul, IAB), or an access link (Access link, AC) in the IAB.

It should be understood that, the bandwidth part group may include only one bandwidth part. That is, a bandwidth part used to transmit one type of data is grouped into one bandwidth part group. When there is an excessively large amount of data of a same type, the data of the same type may also be divided into a plurality of groups. This is not limited in this application.

Optionally, any one of the N bandwidth part groups is associated with a HARQ entity.

Specifically, a bandwidth part group in the N bandwidth part groups may be associated with a HARQ entity, or each of the N bandwidth part groups may be associated with a HARQ entity.

Optionally, there may be one or more associated HARQ entities.

Specifically, at least one of the N bandwidth part groups may be associated with one HARQ entity, or the N bandwidth part groups are associated with one HARQ entity, or the N bandwidth part groups are associated with N HARQ entities.

Optionally, any two of the N bandwidth part groups belong to different HARQ entities. In other words, each bandwidth part group corresponds to one HARQ entity.

Specifically, all bandwidth parts included in each bandwidth part group belong to a same HARQ entity. That one bandwidth part group is associated with one HARQ entity may be that all HARQ processes that can be used by the terminal device to communicate with the network device in bandwidth parts included in the bandwidth part group are controlled by the HARQ entity. The N bandwidth part groups are associated with N HARQ entities. To be specific, each bandwidth part group corresponds to one HARQ entity, and different bandwidth part groups correspond to different HARQ entities.

Optionally, a maximum value of a quantity of HARQ processes supported by the terminal device in the N active bandwidth parts may be P*N, where P is a maximum value of a quantity of HARQ processes supported by the terminal device when there is one bandwidth part that is an active bandwidth part in the M bandwidth parts. The terminal may obtain, by using an RRC configuration, the maximum value of the quantity of HARQ processes supported in the N active bandwidth parts.

Specifically, when there is one bandwidth part that is an active bandwidth part in the M bandwidth parts, that is, the terminal device can communicate with the network device in only one active bandwidth part in one time unit, the maximum value of the quantity of HARQ processes supported by the terminal device may be determined based on a length of a HARQ round-trip time (Round Trip Time, RTT). For example, in the scenario shown in FIG. 5, the maximum value of the quantity of HARQ processes supported by the terminal device is 16. In this embodiment of this application, N bandwidth parts in the M bandwidth parts are active bandwidth parts. In other words, the terminal device can simultaneously transmit data in the N bandwidth parts. In this way, the quantity of HARQ processes supported by the terminal device may be increased to P*N, thereby further improving the data transmission efficiency.

Optionally, the terminal device may first obtain P, and then determine, based on P and N, the maximum value P*N of the quantity of HARQ processes supported in the N active bandwidth parts. The terminal may obtain P by using an RRC configuration, or may obtain a value of P by using a predefined quantity of processes. For example, a value of P of downlink transmission may be obtained by using an RRC configuration, and a value of P of uplink transmission may be obtained by using predefined process data. N is a quantity of bandwidth part groups obtained by the terminal.

Specifically, the terminal device may obtain a maximum value P of a quantity of HARQ processes supported by the terminal device in one HARQ entity when there is one bandwidth part that is an active bandwidth part in the M bandwidth parts. The terminal device determines, based on P and the quantity N of HARQ entities, the maximum value of the quantity of HARQ processes supported by the terminal device.

Optionally, the terminal device may obtain P from the network device. Correspondingly, the network device configures P. The terminal device may alternatively obtain P, for example, from a storage unit of the terminal device. Alternatively, P may be learned of based on a predefinition. This is not limited in this application.

Optionally, the network device may also obtain P, for example, may obtain P from another device, or obtain P, for example, from a storage unit of the network device, or may learn of P based on a predefinition.

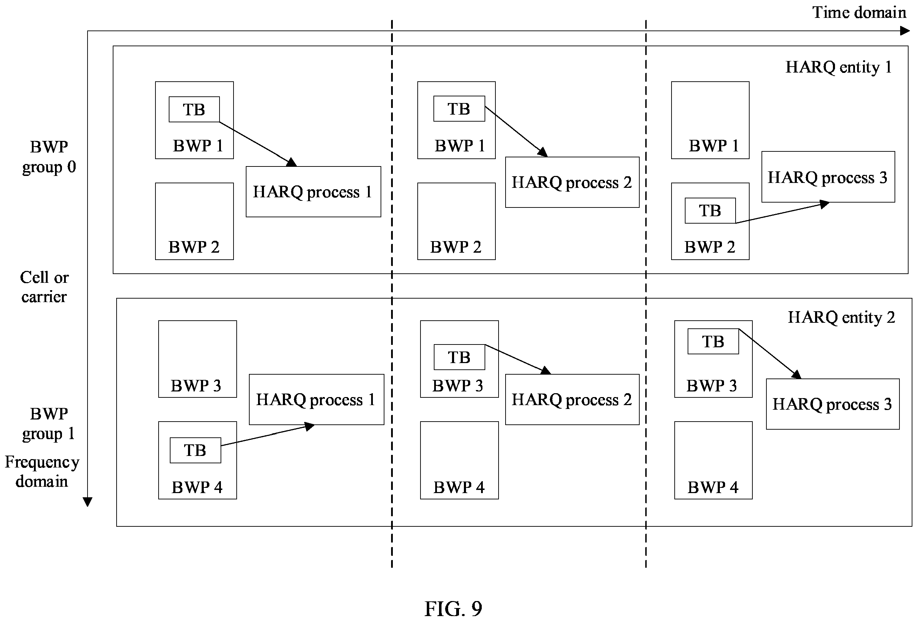

Optionally, as shown in FIG. 9, when each bandwidth part group belongs to one HARQ entity, HARQ processes in each HARQ entity may be independently numbered. The terminal device may first determine a HARQ entity, and then find, in each HARQ entity, a HARQ process corresponding to a HARQ process identity.

When the bandwidth groups correspond to different HARQ entities, a working mechanism of each HARQ entity is the same as that in an existing case in which only one HARQ entity is included and only one bandwidth part is activated in one cell. A processing mechanism in a case in which a plurality of bandwidth groups correspond to a plurality of HARQ entities is a simple extension of the existing mechanism of a single HARQ entity, and is easy to be implemented and managed.

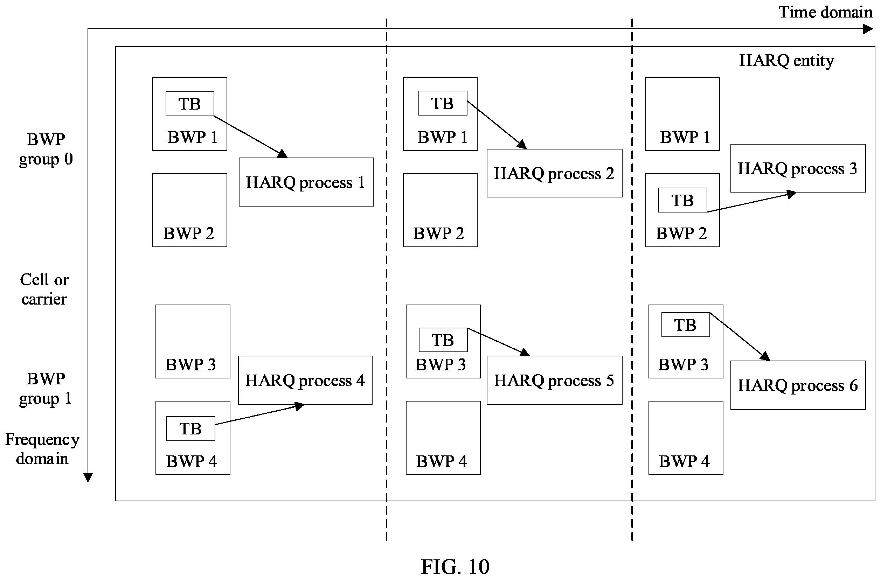

Optionally, the M bandwidth parts may alternatively belong to one HARQ entity. In other words, for example, as shown in FIG. 10, HARQ processes used by the terminal device to transmit data in the M bandwidth parts are controlled by a same HARQ entity.

Optionally, the terminal device may obtain the maximum value P*N of the quantity of HARQ processes supported by the terminal device in the N active bandwidth parts. Correspondingly, the network device determines the maximum value of the quantity of HARQ processes supported by the terminal device in the N active bandwidth parts, and sends, to the terminal device, the maximum value of the quantity of HARQ processes supported by the terminal device in the N active bandwidth parts.

Specifically, the network device may determine, based on the maximum value P of the quantity of HARQ processes supported by the terminal device in one HARQ entity when there is one bandwidth part that is an active bandwidth part in the M bandwidth parts and the quantity N of bandwidth part groups, that the maximum value of the quantity of HARQ processes supported by the terminal device in the N active bandwidth parts is P*N.

Alternatively, the network device determines, based on the maximum value P of the quantity of HARQ processes supported by the terminal device in one HARQ entity when there is one bandwidth part that is an active bandwidth part in the M bandwidth parts and a quantity N of bandwidth parts that can be activated in a same time period in the M bandwidth parts, that the maximum value of the quantity of HARQ processes supported by the terminal device in the N active bandwidth parts is P*N. To be specific, this embodiment may be applied to a scenario in which the M bandwidth parts are divided into N groups, or may be applied to a scenario in which the M bandwidth parts belong to one HARQ entity.

Optionally, HARQ processes in a bandwidth part group may be independently numbered (as shown in FIG. 9).

Optionally, all HARQ processes supported by the terminal device may be numbered in one group (for example, as shown in FIG. 10).

It should be understood that, this embodiment of this application may be applied to a scenario in which the maximum value of the quantity of HARQ processes supported by the terminal device in one HARQ entity when there is one bandwidth part that is an active bandwidth part in the M bandwidth parts can be obtained, or may be applied to a scenario in which a maximum value of a quantity of HARQ processes supported by the terminal device in one HARQ entity when N of the M bandwidth parts are active bandwidth parts can be obtained.

When the M bandwidth parts belong to one HARQ entity, complexity of HARQ entity management is increased on an existing basis that one HARQ entity supports one active BWP. However, a BWP for data sending and retransmission does not need to be selected across groups, thereby improving flexibility of data sending.

Optionally, the terminal device may further receive third indication information, where the third indication information includes a first HARQ process ID. The terminal device determines, based on the first HARQ process ID and a bandwidth part group ID, a target HARQ process ID actually used in a first bandwidth part.

Specifically, when the first indication information includes the bandwidth part group ID, the terminal device may determine the target HARQ process ID based on the third indication information and the bandwidth part group ID. In this way, the terminal device may transmit a signal in the first bandwidth part through a HARQ process corresponding to the target HARQ process ID.

Optionally, the target HARQ process ID actually used by the terminal device to transmit a signal in the first bandwidth part may be determined by using the following formula:
the target HARQ process ID=the bandwidth part group ID*P+the first HARQ process ID.

According to this method, a quantity of HARQ processes that can be actually used by the terminal can be increased without increasing a quantity of bits of the third indication information.

Optionally, each of the M bandwidth parts may alternatively be identified by using an active bandwidth part ID. In other words, the first indication information includes the active bandwidth part ID.

Specifically, a number of an active bandwidth part may vary as an activation status of the bandwidth part changes. For example, as shown in Table 2, a bandwidth part whose BWP ID=0 and a bandwidth part whose BWP ID=2 are activated. An active BWP ID corresponding to the bandwidth part whose BWP ID=0 is 0, and an active BWP ID corresponding to the bandwidth part whose BWP ID=2 is 1. If the active bandwidth part is switched, for example, the bandwidth part whose BWP ID=0 is deactivated, and a bandwidth part whose BWP ID=1 is activated, an active BWP ID corresponding to the bandwidth part whose BWP ID=1 is 0.

**Table 2**

| BWP ID | Activated or not | HARQ ID | Active BWP ID | Target HARQ process ID |
|---|---|---|---|---|
| 0 | Y | 3 | 0 | 3 |
| 1 | N | - | - | - |
| 2 | Y | 5 | 1 | 21 |
| 3 | N | - | - | - |

Optionally, the network device may send fourth indication information to the terminal device, where the fourth indication information includes a first HARQ process and a first active bandwidth part ID. The terminal device determines, based on the first active bandwidth part ID, P, and the first HARQ process ID, a HARQ process used in the first bandwidth part.

Optionally, the target HARQ process ID actually used by the terminal device to transmit data in the first bandwidth part may be determined by using the following formula:
the target HARQ process=the active bandwidth part ID*P+the first HARQ process ID. For example, as shown in Table 3, 0*16+3=3, and 1*16+5=21.

It should be understood that, this embodiment may be applied to the scenario in which the M bandwidth parts are divided into N groups, or may be applied to the scenario in which the M bandwidths belong to one HARQ entity. In addition, this embodiment of this application may also be applied to the foregoing scenario in which numbering is performed in one group.

Optionally, when one serving cell includes a plurality of carriers, some or all of the N bandwidth parts may belong to a same carrier, or some or all of the N bandwidth parts may belong to different carriers.

Specifically, in the scenario shown in FIG. 6, when one cell includes two carriers, in the N bandwidth parts, the BWP 1 may belong to a CC 1, and the BWP 2 may belong to a CC 2.

The network device configures BWPs of different bandwidths on a same CC or different CCs, and bandwidths used for BWPs may be separated or partially overlap, to resolve a problem in using a discrete resource or a non-standard bandwidth spectrum.

Optionally, the plurality of carriers may share one HARQ entity, or different carriers may belong to different HARQ entities.

Specifically, when the M bandwidth parts belong to a plurality of carriers, and the M bandwidth parts belong to one HARQ entity, the plurality of carriers share one HARQ entity. If all of the N active bandwidth parts belong to different carriers, and different active bandwidth parts belong to different HARQ entities, the different carriers also belong to the different HARQ entities.

Optionally, the M bandwidth parts may alternatively be divided into the N bandwidth part groups based on carriers to which the M bandwidth parts belong. For example, bandwidth parts that belong to a same carrier are divided into one bandwidth part group.

Optionally, one carrier group may include carriers that belong to a same HARQ entity. There may be a plurality of carrier groups in different HARQ entities. Optionally, one serving cell includes a plurality of carrier groups, or one serving cell includes a plurality of carrier groups.

In step 702, the terminal device may send signals in the N bandwidth parts, or may receive signals in the N bandwidth parts.

It should be noted that, the signals may be data or signaling. For ease of description, data is used as an example for description in the following embodiments.

Optionally, the terminal device may transmit different signals in different bandwidth parts of the N bandwidth parts.

Optionally, signals transmitted by the terminal device in at least two of the N bandwidth parts may be associated with a same TB. The same TB may refer to data of a same coding redundancy version of the same TB, or may refer to data of different coding redundancy versions of the same TB.

Specifically, one TB in one cell may be mapped to different active bandwidth parts for transmission. To be specific, signals of different code blocks (code block, CB) in data of one TB are separated to different BWPs for transmission. For example, one TB includes two CBs, a CB 1 is transmitted in a BW P1, and a CB 2 is transmitted in a BWP 2. In this way, in this embodiment of this application, independent HARQ feedback and data retransmission of each CB can be implemented.

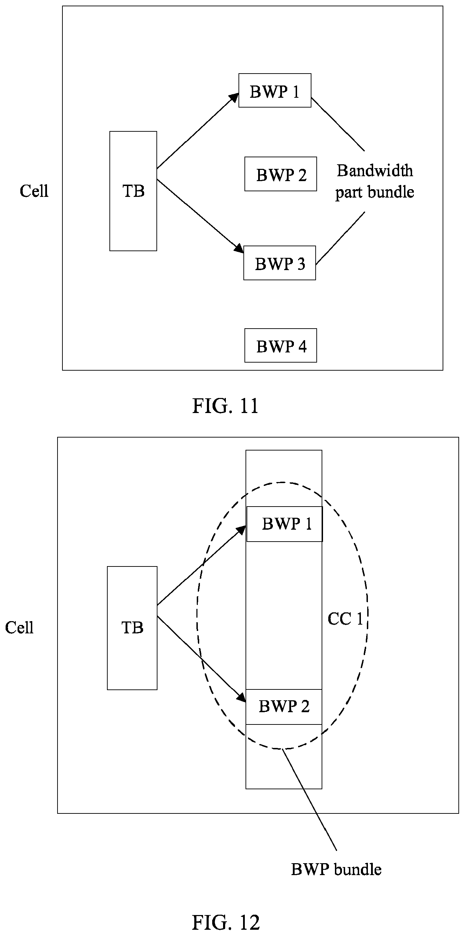

It should be noted that, in this embodiment of this application, bandwidth parts used to transmit a same signal may be referred to as a "bandwidth part bundle (bundle)". For example, as shown in FIG. 11, for the terminal device, a BWP 1 and a BWP 3 in a cell that are used to transmit a same TB may be referred to as a BWP bundle.

It should be noted that, that a signal is associated with a TB may be understood as the signal is generated after the TB is processed in a physical layer processing manner. A same TB may be processed in different physical layer processing manners, to generate different signals. The physical layer processing manners may include scrambling, coded modulation, a redundancy version (redundancy version, RV) version, and the like.

Optionally, the terminal device may determine, based on a resource size of each of a plurality of active BWPs, a data volume for transmitting a TB in each active BWP. In other words, a signal obtained after a TB is encoded may be allocated based on the resource size in the active BWP and a mapping relationship. For example, 240 bits of data are generated after a TB is encoded, a bandwidth of a BWP 1 is 5 M, and a bandwidth of a BWP 2 is 3 M. In this case, 240*5/(5+3)=150 bits of data may be transmitted in the BWP 1, and the remaining 240-150=90 bits of data are transmitted in the BWP 2.

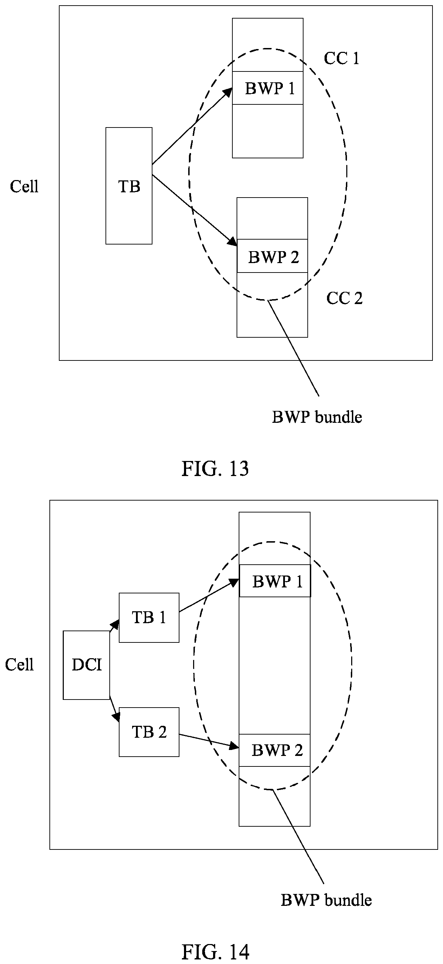

It should be understood that, in this embodiment of this application, BWPs used to transmit a same TB may be on a same carrier (as shown in FIG. 12), or may be on different carriers (as shown in FIG. 13).

It should be understood that, a resource of a BWP may be a bandwidth resource.

Optionally, the terminal device may alternatively determine, based on channel quality (for example, a signal-to-noise ratio (Signal Noise Ratio, SNR)) of each of a plurality of active BWPs, a data volume for transmitting a TB in each active BWP. Alternatively, the terminal device may determine, based on a resource size and channel quality of each of a plurality of active BWPs, a data volume for transmitting a TB in each active BWP.

Optionally, a signal sent in the first bandwidth part of the N bandwidth parts is associated with a first TB, a signal sent in a second bandwidth part of the N bandwidth parts is associated with a second TB, and the first bandwidth part and the second bandwidth part are different.

Specifically, the terminal device may transmit, in the N bandwidth parts, signals associated with different TBs. For example, a signal in the first TB is transmitted in the first bandwidth part of the N bandwidth parts, a signal in the second TB is transmitted in the second bandwidth part of the N bandwidth parts, and the first bandwidth part and the second bandwidth part are different.

It should be understood that, in this embodiment of this application, BWPs used to transmit different TBs may be on a same carrier, or may be on different carriers.

It should be further understood that, the signal in the first TB or the second TB may alternatively be transmitted in a plurality of bandwidth parts.

Optionally, the terminal device may receive second indication information, where the second indication information is used to indicate the terminal device to send signals in the first bandwidth part and the second bandwidth part.

Specifically, the terminal device may receive the second indication information, and obtain, by using the second indication information, a bandwidth part for transmitting the first TB and a bandwidth part for transmitting the second TB.

Optionally, the terminal device may receive fifth indication information, where the fifth indication information may indicate to transmit a first signal in the first bandwidth part of the N bandwidth parts and transmit a second signal in the second bandwidth part of the N bandwidth parts, and the first signal is associated with a same TB. In other words, when one TB is transmitted in different active bandwidth parts, one piece of indication information may alternatively be used for indication.

Optionally, the second indication information or the fifth indication information may be control information, for example, may be downlink control information (Downlink control information, DCI), and is used for downlink assignment or an uplink grant.

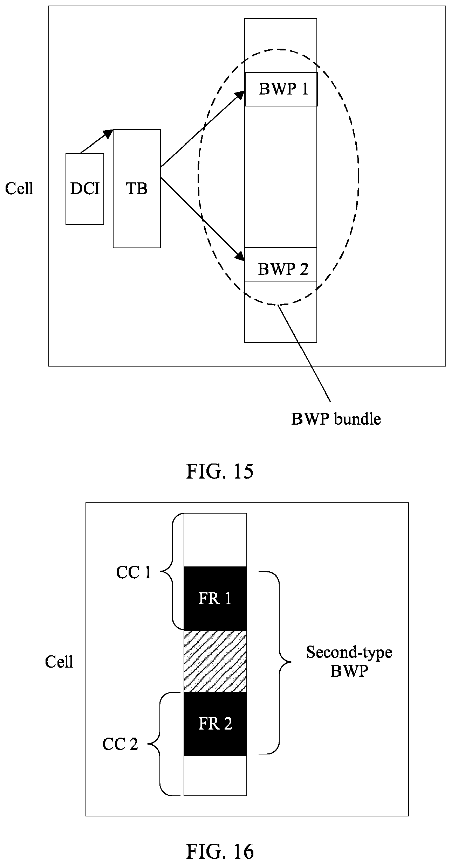

It should be understood that, bandwidth parts scheduled by using one piece of DCI may be referred to as a "BWP bundle". For example, as shown in FIG. 14, at least one bandwidth part that is used to transmit the first TB and that is scheduled by using one piece of DCI and at least one bandwidth part that is used to transmit the second TB and that is scheduled by using the same piece of DCI may be a BWP bundle. As shown in FIG. 15, a BWP 1 and a BWP 2 that are scheduled by using one piece of DCI and that are used to transmit a TB may also be a BWP bundle.

Optionally, different BWPs included in a BWP bundle may alternatively be defined as a new bandwidth part, and the new bandwidth part is referred to as a second-type bandwidth part. As shown in FIG. 16, the second-type BWP includes different frequency parts (Frequency Part, FR). The different FRs may belong to a same carrier, or may belong to different carriers. FIG. 16 shows only a case in which an FR 1 and an FR 2 belong to different carriers.

Optionally, signals transmitted by the terminal device in the second-type BWP may be associated with a same TB.

Optionally, signals transmitted by the terminal device in different FRs of the second-type BWP may be respectively associated with the first TB and the second TB.

It should be understood that, one or more TBs scheduled by using one piece of DCI may be all transmitted in a second-type BWP. Optionally, step 701 and step 702 may be performed by the network device.

Therefore, in the communication method in this embodiment of this application, the terminal device receives the M bandwidth parts located in one cell that are configured for the terminal device, and the N of the M bandwidth parts are active within a same time period, where N is greater than or equal to 2. In other words, the terminal device can simultaneously communicate with a network device in more than one bandwidth part, thereby improving signal transmission efficiency.

It should be understood that in the embodiments of this application, specific examples are merely intended to help a person skilled in the art better understand the embodiments of this application, rather than limit the scope of the embodiments of this application.

It should be understood that sequence numbers of the foregoing processes do not mean execution sequences in various embodiments of this application. The execution sequences of the processes should be determined based on functions and internal logic of the processes, and should not be construed as any limitation on the implementations of the embodiments of this application.

The foregoing describes in detail the communication method, and the following describes a communications apparatus.

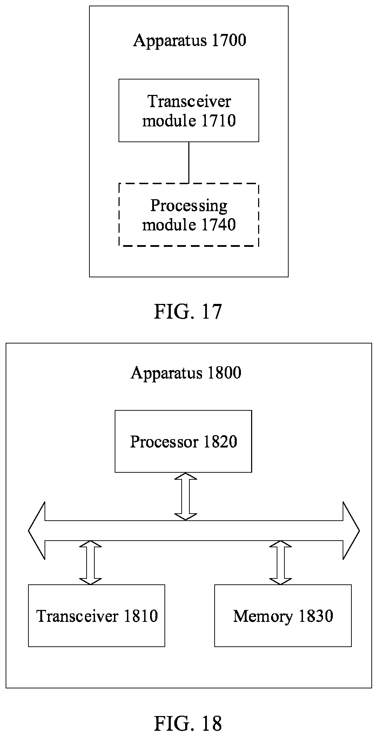

FIG. 17 is a schematic block diagram of an apparatus 1700.

It should be understood that, the apparatus 1700 may correspond to the terminal device in the method embodiments, and may have any function of the terminal device in the methods. The apparatus 1700 includes a transceiver module 1710 and a processing module 1740.

The transceiver module 1710 is configured to receive first indication information, where the first indication information is used to indicate M bandwidth parts located in one cell that are configured for a terminal device, and N of the M bandwidth parts are active within a same time period, where M≥2, 2≤N≤M, and M and N are positive integers.

The communications module is configured to communicate with a network device in the N bandwidth parts.

It should be noted that, the transceiver module 1710 and the communications module may be a same module.

Therefore, the apparatus in this embodiment of this application receives the first indication information used to indicate the M bandwidth parts located in one cell that are configured for the terminal device, and the N of the M bandwidth parts are active within the same time period, where N is greater than or equal to 2. In other words, the terminal device can simultaneously communicate with the network device in more than one bandwidth part, thereby improving signal transmission efficiency.

Optionally, any one of the M bandwidth parts is associated with a bandwidth part group.

N bandwidth part groups include the M bandwidth parts, and each one of the N active bandwidth parts is located in a different bandwidth part group of the N bandwidth part groups.

Optionally, any one of the N bandwidth part groups is associated with a HARQ entity.

Optionally, the apparatus 1700 further includes:
an obtaining module, configured to obtain a maximum value P of a quantity of HARQ processes supported by the terminal device in one HARQ entity.

The processing module 1740 is further configured to determine, based on P and the quantity N of HARQ entities, a maximum value of a quantity of HARQ processes supported by the terminal device in the N bandwidth parts.

Optionally, the apparatus 1700 further includes: an obtaining module, configured to obtain a maximum value of a quantity of HARQ processes supported by the terminal device in the N bandwidth parts.

It should be noted that, when obtaining, from another device, P or the maximum value of the quantity of HARQ processes supported by the terminal device in the N bandwidth parts, the obtaining module may be the transceiver module. When determining P, the obtaining module may be a processing module.

Optionally, signals transmitted in at least two of the N bandwidth parts are associated with a same TB.

Optionally, a signal sent in a first bandwidth part of the N bandwidth parts is associated with a first TB, a signal sent in a second bandwidth part of the N bandwidth parts is associated with a second TB, and the first bandwidth part and the second bandwidth part are different.

Optionally, the transceiver module 1710 is further configured to receive second indication information, where the second indication information is used to indicate the terminal device to transmit the first TB in the first bandwidth part, and transmit the second TB in the second bandwidth part.

Optionally, the communications apparatus 1700 in this embodiment of this application may be a terminal device, or may be a chip in a terminal device.

It should be understood that, the communications apparatus 1700 in this embodiment of this application may correspond to the terminal device in the communication method in the embodiment of FIG. 3, and the foregoing and other management operations and/or functions of the modules in the communications apparatus 1700 are respectively intended to implement corresponding steps in the foregoing methods. For brevity, no more details are described herein again.

Optionally, if the communications apparatus 1700 is a terminal device, the transceiver module 1710 in this embodiment of this application may be implemented by a transceiver 1810, and the processing module 1740 may be implemented by a processor 1820. As shown in FIG. 18, a communications apparatus 1800 may include the transceiver 1810, the processor 1820, and a memory 1830. The memory 1830 may be configured to store indication information, and may be further configured to store code, an instruction, and the like that are executed by the processor 1820. The transceiver 1810 may include a radio frequency circuit. Optionally, the terminal device further includes a storage unit.

The storage unit may be, for example, a memory. When the terminal device includes the storage unit, the storage unit is configured to store a computer-executable instruction, the processing unit is connected to the storage unit, and the processing unit executes the computer-executable instruction stored in the storage unit, so that the terminal device performs the foregoing communication method.

Optionally, if the communications apparatus 1700 is a chip in a terminal device, the chip includes the processing module 1740 and the transceiver module 1710. The transceiver module 1710 may be implemented by a transceiver 1810, and the processing module 1740 may be implemented by a processor 1820. The transceiver module may be, for example, an input/output interface, a pin, or a circuit. The processing module may execute a computer-executable instruction stored in a storage unit. The storage unit is a storage unit in the chip, such as a register or a cache, or the storage unit may be a storage unit in the terminal but outside the chip, such as a read-only memory (read-only memory, ROM), another type of static storage device capable of storing static information and static instructions, or a random access memory (random access memory, RAM).

The processor 1820 may be a general-purpose central processing unit (central processing unit, CPU), a microprocessor, an application-specific integrated circuit (application-specific integrated circuit, ASIC), or one or more integrated circuits configured to perform the technical solutions in the embodiments of this application. Alternatively, the processor may be one or more devices, circuits, and/or processing cores for processing data (for example, a computer program instruction).

During specific implementation, in an embodiment, the processor 1820 may include one or more CPUs.

During specific implementation, in an embodiment, the apparatus 1800 may include a plurality of processors. These processors may be single-core (single-CPU) processors or multi-core (multi-CPU) processors.

A communications interface is configured to receive or send information, a signal, data, and the like that are needed for communication. For example, the communications interface may be an element that has a transceiver function, for example, a transmitter (transmitter), a receiver (receiver), or a transceiver. Alternatively, the communications interface may communicate with another device through the foregoing element that has the transceiver function. The foregoing element that has the transceiver function may be implemented by an antenna and/or a radio frequency apparatus.

In this embodiment of this application, the processor 1820 may perform a function related to processing of information, a signal, data, and the like in the technical solutions provided in the foregoinig embodiments of this application, and the communications interface may receive and/or send the foregoing information, signal, and data, and the like.

During specific implementation, in an embodiment, the apparatus 1800 may further include an output device and an input device. The output device communicates with the processor 1820, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. When communicating with the processor 1701, the input device may receive an input of a user in a plurality of manners. For example, the input device may be a mouse, a keyboard, a touchscreen device, or a sensing device.

Therefore, the apparatus in this embodiment of this application receives the M bandwidth parts located in one cell that are configured for the terminal device, and the N of the M bandwidth parts are active within the same time period, where N is greater than or equal to 2. In other words, the terminal device can simultaneously communicate with the network device in more than one bandwidth part, thereby improving signal transmission efficiency.

It should be understood that in the embodiments of this application, specific examples are merely intended to help a person skilled in the art better understand the embodiments of this application, rather than limit the scope of the embodiments of this application.

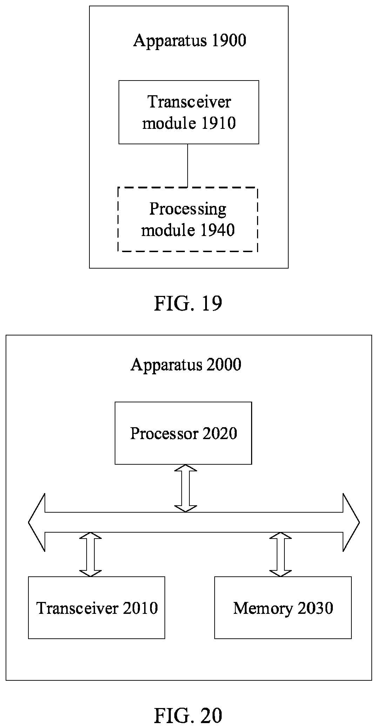

FIG. 19 is a schematic block diagram shows a communications apparatus 1900. The communications apparatus 1900 may be the foregoing network device.

It should be understood that, the communications apparatus 1900 may correspond to the network device in the method embodiments, and may have any function of the network device in the methods. The apparatus 1900 includes a transceiver module 1910 and a communications module 1920.

The transceiver module 1910 is configured to send first indication information, where the first indication information is used to indicate M bandwidth parts located in one cell that are configured for a terminal device, and N of the M bandwidth parts are active within a same time period, where M≥2, 2≤N≤M, and M and N are positive integers.

The communications module is configured to communicate with a network device in the N bandwidth parts.

It should be noted that, the transceiver module 1910 and the communications module may be a same module.

The communications apparatus in this embodiment of this application sends the first indication information used to indicate the M bandwidth parts located in one cell that are configured for the terminal device, and the N of the M bandwidth parts are active within the same time period, where N is greater than or equal to 2. In other words, the network device can simultaneously communicate with the terminal device in more than one bandwidth part, thereby improving signal transmission efficiency.

Optionally, any one of the M bandwidth parts is associated with a bandwidth part group.

N bandwidth part groups include the M bandwidth parts, and each one of the N active bandwidth parts is located in a different bandwidth part group of the N bandwidth part groups.

Optionally, any one of the N bandwidth part groups is associated with a HARQ entity.

Optionally, the apparatus 1900 further includes: an obtaining module, further configured to send a maximum value P of a quantity of HARQ processes supported by the terminal device in one HARQ entity.

It should be noted that, when obtaining P from another device, the obtaining module may be the transceiver module. When determining P, the obtaining module may be a processing module.

Optionally, the apparatus 1900 further includes: a processing module 1940, configured to determine, based on a maximum value P of a quantity of HARQ processes supported by the terminal device in one HARQ entity and the quantity N of HARQ entities associated with the N bandwidth part groups, a maximum value of a quantity of HARQ processes supported by the terminal device in the N bandwidth parts; and the transceiver module 1910 is further configured to send the maximum value of the quantity of HARQ processes supported by the terminal device in the N bandwidth parts.

Optionally, signals transmitted in at least two of the N bandwidth parts are associated with a same TB.

Optionally, a signal sent in a first bandwidth part of the N bandwidth parts is associated with a first TB, a signal sent in a second bandwidth part of the N bandwidth parts is associated with a second TB, and the first bandwidth part and the second bandwidth part are different.

Optionally, the transceiver module 1910 is further configured to receive second indication information, where the second indication information is used to indicate the terminal device to transmit the first TB in the first bandwidth part, and transmit the second TB in the second bandwidth part.

Optionally, the communications apparatus 1900 in this embodiment of this application may be a network device, or may be a chip in a network device.

The communications apparatus in this embodiment of this application sends the M bandwidth parts located in one cell that are configured for the terminal device, and the N of the M bandwidth parts are active within the same time period, where N is greater than or equal to 2. In other words, the network device can simultaneously communicate with the terminal device in more than one bandwidth part, thereby improving signal transmission efficiency.

It should be understood that, the communications apparatus 1900 may correspond to the network device in the communication method in any one of the embodiments in FIG. 7 to FIG. 15, and the foregoing and other management operations and/or functions of the modules in the communications apparatus 1900 are respectively intended to implement corresponding steps in the foregoing methods. For brevity, no more details are described herein again.

Optionally, if the communications apparatus 1900 is a network device, the transceiver module 1910 in this embodiment of this application may be implemented by a transceiver 2010, and the processing module 1940 may be implemented by a processor 2020. As shown in FIG. 20, an apparatus 2000 may include the transceiver 2010 and the processor 2020. The apparatus 2000 may further include a memory 2030 and/or a communications interface. There may be one or more processors, memories, or communications interfaces.

The processor 2020 may be a general-purpose central processing unit (central processing unit, CPU), a microprocessor, an application-specific integrated circuit (application-specific integrated circuit, ASIC), or one or more integrated circuits configured to perform the technical solutions in the embodiments of this application. Alternatively, the processor may be one or more devices, circuits, and/or processing cores for processing data (for example, a computer program instruction).

During specific implementation, in an embodiment, the processor 2020 may include one or more CPUs.

During specific implementation, in an embodiment, the apparatus 2000 may include a plurality of processors. These processors may be single-core (single-CPU) processors or multi-core (multi-CPU) processors.

The communications interface is configured to receive or send information, a signal, data, and the like that are needed for communication. For example, the communications interface may be an element that has a transceiver function, for example, a transmitter (transmitter), a receiver (receiver), or a transceiver. Alternatively, the communications interface may communicate with another device through the foregoing element that has the transceiver function. The foregoing element that has the transceiver function may be implemented by an antenna and/or a radio frequency apparatus.

In this embodiment of this application, the processor 2020 may perform a function related to processing of information, a signal, data, and the like in the technical solutions provided in the following embodiments of this application, and the communications interface may receive and/or send the foregoing information, signal, and data, and the like.

During specific implementation, in an embodiment, the apparatus 2000 may further include an output device and an input device. The output device communicates with the processor 2020, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. When communicating with the processor 1701, the input device may receive an input of a user in a plurality of manners. For example, the input device may be a mouse, a keyboard, a touchscreen device, or a sensing device.

In addition, as described above, the apparatus 2000 provided in this embodiment of this application may be a chip, a terminal, a network device, or a device with a structure similar to that in FIG. 20.

All or some of the foregoing embodiments may be implemented through software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid State Disk, SSD)), or the like.

Storing in this application may be storing in one or more memories. The one or more memories may be separately disposed, or may be integrated into an encoder or a decoder, a processor, a chip, a communications apparatus, or a terminal. Alternatively, some of the one or more memories may be separately disposed, and the others may be integrated into a decoder, a processor, a chip, a communications apparatus, or a terminal. A type of the memory may be a storage medium of any form. This is not limited in this application.

The memory 2030 may be configured to store indication information, and may be further configured to store code, an instruction, and the like that are executed by the processor 2020. The transceiver may include a radio frequency circuit. Optionally, the network device further includes a storage unit.

The storage unit may be, for example, a memory. When the network device includes the storage unit, the storage unit is configured to store a computer-executable instruction, the processing module 1940 is connected to the storage unit, and the processing module 1940 executes the computer-executable instruction stored in the storage unit, so that the network device performs the foregoing communication method.

It should be noted that, it should be understood that division of the units of the network device may be logical function division. That is, all or some of the foregoing functions may be integrated into one physical entity for implementation, or may be physically separated or independently implemented. Alternatively, all of the units may be implemented in a form of software invoked by a processing element, or implemented in a form of hardware. Alternatively, some of the units may be implemented in a form of software invoked by a processing element, and some of the units may be implemented in a form of hardware. Alternatively, the foregoing unit may be a processing element separately disposed in the network device, or may be integrated into a chip of the network device for implementation, or may be stored in a memory of the network device in a form of a program, and is invoked by a processing element to perform a function of the unit. The processing element may be an integrated circuit or a logic circuit, and for example, has a signal processing capability.

Optionally, if the communications apparatus 1900 is a chip in the network device, the chip includes the processing module 1940 and the transceiver module 1910. The transceiver module 1910 may be, for example, an input/output interface, a pin, or a circuit on the chip. The processing module 1940 may execute the computer-executable instruction stored in the storage unit.

Optionally, the storage unit is a storage unit in the chip, such as a register or a cache, or the storage unit may be a storage unit in the terminal but outside the chip, such as a read-only memory (read-only memory, ROM), another type of static storage device capable of storing static information and static instructions, or a random access memory (random access memory, RAM). The storage unit is a storage unit in the chip, such as a register or a cache, or the storage unit may be a storage unit in the terminal but outside the chip, such as a read-only memory (read-only memory, ROM), another type of static storage device capable of storing static information and static instructions, or a random access memory (random access memory, RAM).

It should be understood that, the processor 1820 or the processor 2020 may be an integrated circuit chip and has a signal processing capability. During implementation, steps in the foregoing method embodiments may be implemented by using a hardware integrated logic circuit in the processor, or by using instructions in a form of software. The foregoing processor may be a general purpose processor, a digital signal processor (digital signal processor, DSP), an application-specific integrated circuit (application specific integrated circuit, ASIC), a field programmable gate array (field programmable gate array, FPGA), another programmable logic component, a discrete gate, a transistor logic component, or a discrete hardware assembly. The processor may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly performed and completed by a hardware decoding processor, or may be performed and completed by using a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that, the memory 1830 or the memory 2030 in the embodiments of this application may be a volatile memory or a nonvolatile memory, or may include both a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through illustrative but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchronous link DRAM, SLDRAM), and a direct rambus random access memory (direct rambus RAM, DR RAM).

It should be noted that the memory of the systems and methods described in this specification includes but is not limited to these and any memory of another proper type.

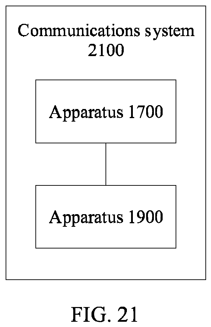

FIG. 21 is a schematic block diagram of a communications system 2100. The communications system 2100 includes:
the communications apparatus 1700 in the embodiment shown in FIG. 17 and the communications apparatus 1900 in the embodiment shown in FIG. 19.

An embodiment of this application further provides a computer storage medium, and the computer storage medium may store a program instruction used to indicate any one of the foregoing methods.

Optionally, the storage medium may be specifically the memory 1830 or the memory 1730.

An embodiment of this application further provides a chip system. The chip system includes a processor, configured to support a distributed unit, a centralized unit, a terminal device, and a network device to implement a function in the foregoing embodiments, for example, generate or process data and/or information in the foregoing methods.

In a possible design, the chip system further includes a memory. The memory is configured to store program instructions and data that are necessary to the distributed unit, the centralized unit, the terminal device, and the network device. The chip system may include a chip, or may include a chip and another discrete component.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for convenient and brief description, for a detailed working process of the foregoing system, apparatus, and unit, refer to the corresponding processes in the foregoing method embodiments, and details are not described herein again.

In the several embodiments provided in this application, it should be understood that the disclosed system, apparatus, and method may be implemented in other manners. For example, the described apparatus embodiment is merely an example. For example, division of the units is merely logical function division, and may be other division in an actual implementation. For example, a plurality of units or assemblies may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims. signal-to-noise ratio (Signal Noise Ratio, SNR)) of each of a plurality of active BWPs, a data volume for transmitting a TB in each active BWP. Alternatively, the terminal device may determine, based on a resource size and channel quality of each of a plurality of active BWPs, a data volume for transmitting a TB in each active BWP.

Optionally, a signal sent in the first bandwidth part of the N bandwidth parts is associated with a first TB, a signal sent in a second bandwidth part of the N bandwidth parts is associated with a second TB, and the first bandwidth part and the second bandwidth part are different.

Specifically, the terminal device may transmit, in the N bandwidth parts, signals associated with different TBs. For example, a signal in the first TB is transmitted in the first bandwidth part of the N bandwidth parts, a signal in the second TB is transmitted in the second bandwidth part of the N bandwidth parts, and the first bandwidth part and the second bandwidth part are different.

It should be understood that, in this embodiment of this application, BWPs used to transmit different TBs may be on a same carrier, or may be on different carriers.

It should be further understood that, the signal in the first TB or the second TB may alternatively be transmitted in a plurality of bandwidth parts.

Optionally, the terminal device may receive second indication information, where the second indication information is used to indicate the terminal device to send signals in the first bandwidth part and the second bandwidth part.

Specifically, the terminal device may receive the second indication information, and obtain, by using the second indication information, a bandwidth part for transmitting the first TB and a bandwidth part for transmitting the second TB.

Optionally, the terminal device may receive fifth indication information, where the fifth indication information may indicate to transmit a first signal in the first bandwidth part of the N bandwidth parts and transmit a second signal in the second bandwidth part of the N bandwidth parts, and the first signal is associated with a same TB.

In other words, when one TB is transmitted in different active bandwidth parts, one piece of indication information may alternatively be used for indication.

Optionally, the second indication information or the fifth indication information may be control information, for example, may be downlink control information (Downlink control information, DCI), and is used for downlink assignment or an uplink grant.

It should be understood that, bandwidth parts scheduled by using one piece of DCI may be referred to as a "BWP bundle". For example, as shown in FIG. 14, at least one bandwidth part that is used to transmit the first TB and that is scheduled by using one piece of DCI and at least one bandwidth part that is used to transmit the second TB and that is scheduled by using the same piece of DCI may be a BWP bundle. As shown in FIG. 15, a BWP 1 and a BWP 2 that are scheduled by using one piece of DCI and that are used to transmit a TB may also be a BWP bundle.

Optionally, different BWPs included in a BWP bundle may alternatively be defined as a new bandwidth part, and the new bandwidth part is referred to as a second-type bandwidth part. As shown in FIG. 16, the second-type BWP includes different frequency parts (Frequency Part, FR). The different FRs may belong to a same carrier, or may belong to different carriers. FIG. 16 shows only a case in which an FR 1 and an FR 2 belong to different carriers.

Optionally, signals transmitted by the terminal device in the second-type BWP may be associated with a same TB.

Optionally, signals transmitted by the terminal device in different FRs of the second-type BWP may be respectively associated with the first TB and the second TB.

It should be understood that, one or more TBs scheduled by using one piece of DCI may be all transmitted in a second-type BWP. Optionally, step 701 and step 702 may be performed by the network device.

Therefore, in the communication method in this embodiment of this application, the terminal device receives the M bandwidth parts located in one cell that are configured for the terminal device, and the N of the M bandwidth parts are active within a same time period, where N is greater than or equal to 2. In other words, the terminal device can simultaneously communicate with a network device in more than one bandwidth part, thereby improving signal transmission efficiency.

It should be understood that in the embodiments of this application, specific examples are merely intended to help a person skilled in the art better understand the embodiments of this application, rather than limit the scope of the embodiments of this application.

It should be understood that sequence numbers of the foregoing processes do not mean execution sequences in various embodiments of this application. The execution sequences of the processes should be determined based on functions and internal logic of the processes, and should not be construed as any limitation on the implementations of the embodiments of this application.

The foregoing describes in detail the communication method according to the embodiments of this application, and the following describes a communications apparatus according to the embodiments of this application.

FIG. 17 is a schematic block diagram of an apparatus 1700 according to an embodiment of this application.

It should be understood that, the apparatus 1700 may correspond to the terminal device in the method embodiments, and may have any function of the terminal device in the methods. The apparatus 1700 includes a transceiver module 1710 and a processing module 1740.

The transceiver module 1710 is configured to receive first indication information, where the first indication information is used to indicate M bandwidth parts located in one cell that are configured for a terminal device, and N of the M bandwidth parts are active within a same time period, where M≥2, 2≤N≤M, and M and N are positive integers.

The communications module is configured to communicate with a network device in the N bandwidth parts.

It should be noted that, the transceiver module 1710 and the communications module may be a same module.

Therefore, the apparatus in this embodiment of this application receives the first indication information used to indicate the M bandwidth parts located in one cell that are configured for the terminal device, and the N of the M bandwidth parts are active within the same time period, where N is greater than or equal to 2. In other words, the terminal device can simultaneously communicate with the network device in more than one bandwidth part, thereby improving signal transmission efficiency.

Optionally, any one of the M bandwidth parts is associated with a bandwidth part group.

Optionally, N bandwidth part groups include the M bandwidth parts, and any one of the N bandwidth parts is located in different bandwidth part groups in the N bandwidth part groups.

Optionally, any one of the N bandwidth part groups is associated with a HARQ entity.

Optionally, the apparatus 1700 further includes:
an obtaining module, configured to obtain a maximum value P of a quantity of HARQ processes supported by the terminal device in one HARQ entity.

The processing module 1740 is further configured to determine, based on P and the quantity N of HARQ entities, a maximum value of a quantity of HARQ processes supported by the terminal device in the N bandwidth parts.

Optionally, the apparatus 1700 further includes: an obtaining module, configured to obtain a maximum value of a quantity of HARQ processes supported by the terminal device in the N bandwidth parts.

It should be noted that, when obtaining, from another device, P or the maximum value of the quantity of HARQ processes supported by the terminal device in the N bandwidth parts, the obtaining module may be the transceiver module. When determining P, the obtaining module may be a processing module.

Optionally, signals transmitted in at least two of the N bandwidth parts are associated with a same TB.

Optionally, a signal sent in a first bandwidth part of the N bandwidth parts is associated with a first TB, a signal sent in a second bandwidth part of the N bandwidth parts is associated with a second TB, and the first bandwidth part and the second bandwidth part are different.

Optionally, the transceiver module 1710 is further configured to receive second indication information, where the second indication information is used to indicate the terminal device to transmit the first TB in the first bandwidth part, and transmit the second TB in the second bandwidth part.

Optionally, the communications apparatus 1700 in this embodiment of this application may be a terminal device, or may be a chip in a terminal device.

It should be understood that, the communications apparatus 1700 in this embodiment of this application may correspond to the terminal device in the communication method in the embodiment of FIG. 3, and the foregoing and other management operations and/or functions of the modules in the communications apparatus 1700 are respectively intended to implement corresponding steps in the foregoing methods. For brevity, no more details are described herein again.

Optionally, if the communications apparatus 1700 is a terminal device, the transceiver module 1710 in this embodiment of this application may be implemented by a transceiver 1810, and the processing module 1740 may be implemented by a processor 1820. As shown in FIG. 18, a communications apparatus 1800 may include the transceiver 1810, the processor 1820, and a memory 1830. The memory 1830 may be configured to store indication information, and may be further configured to store code, an instruction, and the like that are executed by the processor 1820. The transceiver 1810 may include a radio frequency circuit. Optionally, the terminal device further includes a storage unit.

The storage unit may be, for example, a memory. When the terminal device includes the storage unit, the storage unit is configured to store a computer-executable instruction, the processing unit is connected to the storage unit, and the processing unit executes the computer-executable instruction stored in the storage unit, so that the terminal device performs the foregoing communication method.

Optionally, if the communications apparatus 1700 is a chip in a terminal device, the chip includes the processing module 1740 and the transceiver module 1710. The transceiver module 1710 may be implemented by a transceiver 1810, and the processing module 1740 may be implemented by a processor 1820. The transceiver module may be, for example, an input/output interface, a pin, or a circuit. The processing module may execute a computer-executable instruction stored in a storage unit. The storage unit is a storage unit in the chip, such as a register or a cache, or the storage unit may be a storage unit in the terminal but outside the chip, such as a read-only memory (read-only memory, ROM), another type of static storage device capable of storing static information and static instructions, or a random access memory (random access memory, RAM).

The processor 1820 may be a general-purpose central processing unit (central processing unit, CPU), a microprocessor, an application-specific integrated circuit (application-specific integrated circuit, ASIC), or one or more integrated circuits configured to perform the technical solutions in the embodiments of this application. Alternatively, the processor may be one or more devices, circuits, and/or processing cores for processing data (for example, a computer program instruction).

During specific implementation, in an embodiment, the processor 1820 may include one or more CPUs.

During specific implementation, in an embodiment, the apparatus 1800 may include a plurality of processors. These processors may be single-core (single-CPU) processors or multi-core (multi-CPU) processors.

A communications interface is configured to receive or send information, a signal, data, and the like that are needed for communication. For example, the communications interface may be an element that has a transceiver function, for example, a transmitter (transmitter), a receiver (receiver), or a transceiver. Alternatively, the communications interface may communicate with another device through the foregoing element that has the transceiver function. The foregoing element that has the transceiver function may be implemented by an antenna and/or a radio frequency apparatus,

In this embodiment of this application, the processor 1820 may perform a function related to processing of information, a signal, data, and the like in the technical solutions provided in the foregoinig embodiments of this application, and the communications interface may receive and/or send the foregoing information, signal, and data, and the like.

During specific implementation, in an embodiment, the apparatus 1800 may further include an output device and an input device. The output device communicates with the processor 1820, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. When communicating with the processor 1701, the input device may receive an input of a user in a plurality of manners. For example, the input device may be a mouse, a keyboard, a touchscreen device, or a sensing device.

Therefore, the apparatus in this embodiment of this application receives the M bandwidth parts located in one cell that are configured for the terminal device, and the N of the M bandwidth parts are active within the same time period, where N is greater than or equal to 2. In other words, the terminal device can simultaneously communicate with the network device in more than one bandwidth part, thereby improving signal transmission efficiency.

It should be understood that in the embodiments of this application, specific examples are merely intended to help a person skilled in the art better understand the embodiments of this application, rather than limit the scope of the embodiments of this application.

FIG. 19 is a schematic block diagram shows a communications apparatus 1900 according to an embodiment of this application. The communications apparatus 1900 may be the foregoing network device.

It should be understood that, the communications apparatus 1900 may correspond to the network device in the method embodiments, and may have any function of the network device in the methods. The apparatus 1900 includes a transceiver module 1910 and a communications module 1920.

The transceiver module 1910 is configured to send first indication information, where the first indication information is used to indicate M bandwidth parts located in one cell that are configured for a terminal device, and N of the M bandwidth parts are active within a same time period, where M≥2, 2≤N≤M, and M and N are positive integers.

The communications module is configured to communicate with a network device in the N bandwidth parts.

It should be noted that, the transceiver module 1910 and the communications module may be a same module.

The communications apparatus in this embodiment of this application sends the first indication information used to indicate the M bandwidth parts located in one cell that are configured for the terminal device, and the N of the M bandwidth parts are active within the same time period, where N is greater than or equal to 2. In other words, the network device can simultaneously communicate with the terminal device in more than one bandwidth part, thereby improving signal transmission efficiency.

Optionally, any one of the M bandwidth parts is associated with a bandwidth part group.

Optionally, N bandwidth part groups include the M bandwidth parts, and any one of the N bandwidth parts is located in different bandwidth part groups in the N bandwidth part groups.

Optionally, any one of the N bandwidth part groups is associated with a HARQ entity.

Optionally, the apparatus 1900 further includes: an obtaining module, further configured to send a maximum value P of a quantity of HARQ processes supported by the terminal device in one HARQ entity.

It should be noted that, when obtaining P from another device, the obtaining module may be the transceiver module. When determining P, the obtaining module may be a processing module.

Optionally, the apparatus 1900 further includes: a processing module 1940, configured to determine, based on a maximum value P of a quantity of HARQ processes supported by the terminal device in one HARQ entity and the quantity N of HARQ entities associated with the N bandwidth part groups, a maximum value of a quantity of HARQ processes supported by the terminal device in the N bandwidth parts; and the transceiver module 1910 is further configured to send the maximum value of the quantity of HARQ processes supported by the terminal device in the N bandwidth parts.

Optionally, signals transmitted in at least two of the N bandwidth parts are associated with a same TB.

Optionally, a signal sent in a first bandwidth part of the N bandwidth parts is associated with a first TB, a signal sent in a second bandwidth part of the N bandwidth parts is associated with a second TB, and the first bandwidth part and the second bandwidth part are different.

Optionally, the transceiver module 1910 is further configured to receive second indication information, where the second indication information is used to indicate the terminal device to transmit the first TB in the first bandwidth part, and transmit the second TB in the second bandwidth part.

Optionally, the communications apparatus 1900 in this embodiment of this application may be a network device, or may be a chip in a network device.

The communications apparatus in this embodiment of this application sends the M bandwidth parts located in one cell that are configured for the terminal device, and the N of the M bandwidth parts are active within the same time period, where N is greater than or equal to 2. In other words, the network device can simultaneously communicate with the terminal device in more than one bandwidth part, thereby improving signal transmission efficiency.

It should be understood that, the communications apparatus 1900 according to this embodiment of this application may correspond to the network device in the communication method in any one of the embodiments in FIG. 7 to FIG. 15, and the foregoing and other management operations and/or functions of the modules in the communications apparatus 1900 are respectively intended to implement corresponding steps in the foregoing methods. For brevity, no more details are described herein again.

Optionally, if the communications apparatus 1900 is a network device, the transceiver module 1910 in this embodiment of this application may be implemented by a transceiver 2010, and the processing module 1940 may be implemented by a processor 2020. As shown in FIG. 20, an apparatus 2000 may include the transceiver 2010 and the processor 2020. The apparatus 2000 may further include a memory 2030 and/or a communications interface. There may be one or more processors, memories, or communications interfaces.

The processor 2020 may be a general-purpose central processing unit (central processing unit, CPU), a microprocessor, an application-specific integrated circuit (application-specific integrated circuit, ASIC), or one or more integrated circuits configured to perform the technical solutions in the embodiments of this application. Alternatively, the processor may be one or more devices, circuits, and/or processing cores for processing data (for example, a computer program instruction).

During specific implementation, in an embodiment, the processor 2020 may include one or more CPUs.

During specific implementation, in an embodiment, the apparatus 2000 may include a plurality of processors. These processors may be single-core (single-CPU) processors or multi-core (multi-CPU) processors.

The communications interface is configured to receive or send information, a signal, data, and the like that are needed for communication. For example, the communications interface may be an element that has a transceiver function, for example, a transmitter (transmitter), a receiver (receiver), or a transceiver. Alternatively, the communications interface may communicate with another device through the foregoing element that has the transceiver function. The foregoing element that has the transceiver function may be implemented by an antenna and/or a radio frequency apparatus.

In this embodiment of this application, the processor 2020 may perform a function related to processing of information, a signal, data, and the like in the technical solutions provided in the following embodiments of this application, and the communications interface may receive and/or send the foregoing information, signal, and data, and the like.

During specific implementation, in an embodiment, the apparatus 2000 may further include an output device and an input device. The output device communicates with the processor 2020, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. When communicating with the processor 1701, the input device may receive an input of a user in a plurality of manners. For example, the input device may be a mouse, a keyboard, a touchscreen device, or a sensing device.

In addition, as described above, the apparatus 2000 provided in this embodiment of this application may be a chip, a terminal, a network device, or a device with a structure similar to that in FIG. 20.

All or some of the foregoing embodiments may be implemented through software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid State Disk, SSD)), or the like.

Storing in this application may be storing in one or more memories. The one or more memories may be separately disposed, or may be integrated into an encoder or a decoder, a processor, a chip, a communications apparatus, or a terminal. Alternatively, some of the one or more memories may be separately disposed, and the others may be integrated into a decoder, a processor, a chip, a communications apparatus, or a terminal. A type of the memory may be a storage medium of any form. This is not limited in this application.

The memory 2030 may be configured to store indication information, and may be further configured to store code, an instruction, and the like that are executed by the processor 2020. The transceiver may include a radio frequency circuit. Optionally, the network device further includes a storage unit.

The storage unit may be, for example, a memory. When the network device includes the storage unit, the storage unit is configured to store a computer-executable instruction, the processing module 1940 is connected to the storage unit, and the processing module 1940 executes the computer-executable instruction stored in the storage unit, so that the network device performs the foregoing communication method.

It should be noted that, it should be understood that division of the units of the network device may be logical function division. That is, all or some of the foregoing functions may be integrated into one physical entity for implementation, or may be physically separated or independently implemented. Alternatively, all of the units may be implemented in a form of software invoked by a processing element, or implemented in a form of hardware. Alternatively, some of the units may be implemented in a form of software invoked by a processing element, and some of the units may be implemented in a form of hardware. Alternatively, the foregoing unit may be a processing element separately disposed in the network device, or may be integrated into a chip of the network device for implementation, or may be stored in a memory of the network device in a form of a program, and is invoked by a processing element to perform a function of the unit. The processing element may be an integrated circuit or a logic circuit, and for example, has a signal processing capability.

Optionally, if the communications apparatus 1900 is a chip in the network device, the chip includes the processing module 1940 and the transceiver module 1910. The transceiver module 1910 may be, for example, an input/output interface, a pin, or a circuit on the chip. The processing module 1940 may execute the computer-executable instruction stored in the storage unit.

Optionally, the storage unit is a storage unit in the chip, such as a register or a cache, or the storage unit may be a storage unit in the terminal but outside the chip, such as a read-only memory (read-only memory, ROM), another type of static storage device capable of storing static information and static instructions, or a random access memory (random access memory, RAM). The storage unit is a storage unit in the chip, such as a register or a cache, or the storage unit may be a storage unit in the terminal but outside the chip, such as a read-only memory (read-only memory, ROM), another type of static storage device capable of storing static information and static instructions, or a random access memory (random access memory, RAM).

It should be understood that, the processor 1820 or the processor 2020 may be an integrated circuit chip and has a signal processing capability. During implementation, steps in the foregoing method embodiments may be implemented by using a hardware integrated logic circuit in the processor, or by using instructions in a form of software. The foregoing processor may be a general purpose processor, a digital signal processor (digital signal processor, DSP), an application-specific integrated circuit (application specific integrated circuit, ASIC), a field programmable gate array (field programmable gate array, FPGA), another programmable logic component, a discrete gate, a transistor logic component, or a discrete hardware assembly. The processor may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly performed and completed by a hardware decoding processor, or may be performed and completed by using a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that, the memory 1830 or the memory 2030 in the embodiments of this application may be a volatile memory or a nonvolatile memory, or may include both a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through illustrative but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchronous link DRAM, SLDRAM), and a direct rambus random access memory (direct rambus RAM, DR RAM).

It should be noted that the memory of the systems and methods described in this specification includes but is not limited to these and any memory of another proper type.

FIG. 21 is a schematic block diagram of a communications system 2100 according to an embodiment of this application. The communications system 2100 includes:
the communications apparatus 1700 in the embodiment shown in FIG. 17 and the communications apparatus 1900 in the embodiment shown in FIG. 19.

An embodiment of this application further provides a computer storage medium, and the computer storage medium may store a program instruction used to indicate any one of the foregoing methods.

Optionally, the storage medium may be specifically the memory 1830 or the memory 1730.

An embodiment of this application further provides a chip system. The chip system includes a processor, configured to support a distributed unit, a centralized unit, a terminal device, and a network device to implement a function in the foregoing embodiments, for example, generate or process data and/or information in the foregoing methods.

In a possible design, the chip system further includes a memory. The memory is configured to store program instructions and data that are necessary to the distributed unit, the centralized unit, the terminal device, and the network device. The chip system may include a chip, or may include a chip and another discrete component.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for convenient and brief description, for a detailed working process of the foregoing system, apparatus, and unit, refer to the corresponding processes in the foregoing method embodiments, and details are not described herein again.

In the several embodiments provided in this application, it should be understood that the disclosed system, apparatus, and method may be implemented in other manners. For example, the described apparatus embodiment is merely an example. For example, division of the units is merely logical function division, and may be other division in an actual implementation. For example, a plurality of units or assemblies may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving (701), by a terminal device, first indication information, wherein the first indication information is used to indicate M bandwidth parts located in one cell that are configured for a terminal device, N of the M bandwidth parts are active within a same time period, the M bandwidth parts are associated with N bandwidth part groups, the N bandwidth part groups are associated with N HARQ entities, and different bandwidth part groups in the N bandwidth part groups are associated with different HARQ entities, wherein M≥2, 2≤N≤M, and M and N are positive integers; and
communicating (702), by the terminal device, with a network device in the N bandwidth parts,
**characterised in that**
the N bandwidth part groups comprise the M bandwidth parts and at least one of the N bandwidth part groups comprises two or more bandwidth parts, and each one of the N active bandwidth parts is located in a different bandwidth part group of the N bandwidth part groups.

2. The method according to claim 1, wherein the method further comprises:
obtaining, by the terminal device, a maximum value P of a quantity of HARQ processes supported by the terminal device in one HARQ entity; and
determining, by the terminal device, based on P and the quantity N of HARQ entities, a maximum value of a quantity of HARQ processes supported by the terminal device in the N bandwidth parts.

3. The method according to claim 1, wherein the method further comprises:
obtaining, by the terminal device, a maximum value of a quantity of HARQ processes supported by the terminal device in the N bandwidth parts.

4. The method according to any one of claims 1 to 3, wherein signals transmitted in at least two of the N bandwidth parts are associated with a same TB.

5. The method according to any one of claims 1 to 3, wherein a signal sent in a first bandwidth part of the N bandwidth parts is associated with a first TB, a signal sent in a second bandwidth part of the N bandwidth parts is associated with a second TB, and the first bandwidth part and the second bandwidth part are different.

6. The method according to claim 5, wherein the method further comprises:
receiving, by the terminal device, second indication information, wherein the second indication information is used to indicate the terminal device to transmit the first TB in the first bandwidth part, and transmit the second TB in the second bandwidth part.

7. A communication method, comprising:
sending (701), by a network device, first indication information, wherein the first indication information is used to indicate M bandwidth parts located in one cell that are configured for a terminal device, N of the M bandwidth parts are active within a same time period, the M bandwidth parts are associated with N bandwidth part groups, the N bandwidth part groups are associated with N HARQ entities, and different bandwidth part groups in the N bandwidth part groups are associated with different HARQ entities, wherein M≥2, 2≤N≤M, and M and N are positive integers; and
communicating (702), by the network device, with a terminal device in the N bandwidth parts,
**characterised in that**
the N bandwidth part groups comprise the M bandwidth parts and at least one of the N bandwidth part groups comprises two or more bandwidth parts, and each one of the N active bandwidth parts is located in a different bandwidth part group of the N bandwidth part groups..

8. The method according to claim 7, wherein the method further comprises:
sending, by the network device, a maximum value P of a quantity of HARQ processes supported by the terminal device in one HARQ entity.

9. The method according to claim 7 or 8, wherein the method further comprises:
determining, by the network device, based on a maximum value P of a quantity of HARQ processes supported by the terminal device in one HARQ entity and the quantity N of HARQ entities associated with the N bandwidth part groups, a maximum value of a quantity of HARQ processes supported by the terminal device in the N bandwidth parts; and
sending, by the network device, the maximum value of the quantity of HARQ processes supported by the terminal device in the N bandwidth parts.

10. The method according to any one of claims 7 to 9, wherein signals transmitted in at least two of the N bandwidth parts are associated with a same TB.

11. The method according to any one of claims 7 to 9, wherein a signal sent in a first bandwidth part of the N bandwidth parts is associated with a first TB, a signal sent in a second bandwidth part of the N bandwidth parts is associated with a second TB, and the first bandwidth part and the second bandwidth part are different.

12. The method according to claim 11, wherein the method further comprises:
receiving, by the network device, second indication information, wherein the second indication information is used to indicate the terminal device to transmit the first TB in the first bandwidth part, and transmit the second TB in the second bandwidth part.

13. A computer-readable storage medium, comprising an instruction, wherein when the instruction is run on a computer, the computer is enabled to perform the method according to any one of claims 1 to 12.

14. A computer program product, wherein when the computer program product is run on a computer, the computer is enabled to perform the method according to any one of claims 1 to 12.

## Patentansprüche

1. Kommunikationsverfahren, umfassend:
Empfangen (701), durch eine Endgerätvorrichtung, erster Anzeigeinformationen, wobei die ersten Anzeigeinformationen dazu verwendet werden, M Bandbreitenteile anzuzeigen, die sich in einer Zelle befinden und für eine Endgerätvorrichtung konfiguriert sind, N der M Bandbreitenteile innerhalb einer selben Zeitspanne aktiv sind, die M Bandbreitenteile mit N Bandbreitenteilgruppen assoziiert sind, die N Bandbreitenteilgruppen mit N HARQ-Einheiten assoziiert sind und unterschiedliche Bandbreitenteilgruppen in den N Bandbreitenteilgruppen mit unterschiedlichen HARQ-Einheiten assoziiert sind, wobei M≥2, 2≤N≤M und M und N positive Ganzzahlen sind; und
Kommunizieren (702), durch die Endgerätvorrichtung, mit einer Netzwerkvorrichtung in den N Bandbreitenteilen,
**dadurch gekennzeichnet, dass**
die N Bandbreitenteilgruppen die M Bandbreitenteile umfassen und mindestens eine der N Bandbreitenteilgruppen zwei oder mehr Bandbreitenteile umfasst und sich ein jeder der N aktiven Bandbreitenteile in einer anderen Bandbreitenteilgruppe der N Bandbreitenteilgruppen befindet.

2. Verfahren nach Anspruch 1, wobei das Verfahren ferner Folgendes umfasst:
Erlangen, durch die Endgerätvorrichtung, eines Maximalwerts P einer Menge von HARQ-Prozessen, die durch die Endgerätvorrichtung in einer HARQ-Einheit unterstützt werden; und
Bestimmen, durch die Endgerätvorrichtung, basierend auf P und der Menge N von HARQ-Einheiten, eines Maximalwerts einer Menge von HARQ-Prozessen, die durch die Endgerätvorrichtung in den N Bandbreitenteilen unterstützt werden.

3. Verfahren nach Anspruch 1, wobei das Verfahren ferner Folgendes umfasst:
Erlangen, durch die Endgerätvorrichtung, eines Maximalwerts einer Menge von HARQ-Prozessen, die durch die Endgerätvorrichtung in den N Bandbreitenteilen unterstützt werden.

4. Verfahren nach einem der Ansprüche 1 bis 3, wobei Signale, die in mindestens zwei der N Bandbreitenteile übertragen werden, mit einem gleichen TB assoziiert sind.

5. Verfahren nach einem der Ansprüche 1 bis 3, wobei ein Signal, das in einem ersten Bandbreitenteil der N Bandbreitenteile gesandt wird, mit einem ersten TB assoziiert ist, ein Signal, das in einem zweiten Bandbreitenteil der N Bandbreitenteile gesandt wird, mit einem zweiten TB assoziiert ist und der erste Bandbreitenteil und der zweite Bandbreitenteil unterschiedlich sind.

6. Verfahren nach Anspruch 5, wobei das Verfahren ferner Folgendes umfasst:
Empfangen, durch die Endgerätvorrichtung, zweiter Anzeigeinformationen, wobei die zweiten Anzeigeinformationen dazu verwendet werden, die Endgerätvorrichtung anzuweisen, den ersten TB in dem ersten Bandbreitenteil zu übertragen und den zweiten TB in dem zweiten Bandbreitenteil zu übertragen.

7. Kommunikationsverfahren, umfassend:
Senden (701), durch eine Netzwerkvorrichtung, erster Anzeigeinformationen, wobei die ersten Anzeigeinformationen dazu verwendet werden, M Bandbreitenteile anzuzeigen, die sich in einer Zelle befinden und für eine Endgerätvorrichtung konfiguriert sind, N der M Bandbreitenteile innerhalb einer selben Zeitspanne aktiv sind, die M Bandbreitenteile mit N Bandbreitenteilgruppen assoziiert sind, die N Bandbreitenteilgruppen mit N HARQ-Einheiten assoziiert sind und unterschiedliche Bandbreitenteilgruppen in den N Bandbreitenteilgruppen mit unterschiedlichen HARQ-Einheiten assoziiert sind, wobei M≥2, 2≤N≤M und M und N positive Ganzzahlen sind; und
Kommunizieren (702), durch die Netzwerkvorrichtung, mit einer Endgerätvorrichtung in den N Bandbreitenteilen,
**dadurch gekennzeichnet, dass**
die N Bandbreitenteilgruppen die M Bandbreitenteile umfassen und mindestens eine der N Bandbreitenteilgruppen zwei oder mehr Bandbreitenteile umfasst und sich ein jeder der N aktiven Bandbreitenteile in einer anderen Bandbreitenteilgruppe der N Bandbreitenteilgruppen befindet.

8. Verfahren nach Anspruch 7, wobei das Verfahren ferner Folgendes umfasst:
Senden, durch die Netzwerkvorrichtung, eines Maximalwerts P einer Menge von HARQ-Prozessen, die durch die Endgerätvorrichtung in einer HARQ-Einheit unterstützt werden.

9. Verfahren nach Anspruch 7 oder 8, wobei das Verfahren ferner Folgendes umfasst:
Bestimmen, durch die Netzwerkvorrichtung, basierend auf einem Maximalwert P einer Menge von HARQ-Prozessen, die durch die Endgerätvorrichtung in einer HARQ-Einheit unterstützt werden, und
der Menge N von HARQ-Einheiten, die mit den N Bandbreitenteilgruppen assoziiert sind, eines Maximalwerts einer Menge von HARQ-Prozessen, die durch die Endgerätvorrichtung in den N Bandbreitenteilen unterstützt werden; und
Senden, durch die Netzwerkvorrichtung, des Maximalwerts der Menge von HARQ-Prozessen, die durch die Endgerätvorrichtung in den N Bandbreitenteilen unterstützt werden.

10. Verfahren nach einem der Ansprüche 7 bis 9, wobei Signale, die in mindestens zwei der N Bandbreitenteile übertragen werden, mit einem gleichen TB assoziiert sind.

11. Verfahren nach einem der Ansprüche 7 bis 9, wobei ein Signal, das in einem ersten Bandbreitenteil der N Bandbreitenteile gesandt wird, mit einem ersten TB assoziiert ist, ein Signal, das in einem zweiten Bandbreitenteil der N Bandbreitenteile gesandt wird, mit einem zweiten TB assoziiert ist und der erste Bandbreitenteil und der zweite Bandbreitenteil unterschiedlich sind.

12. Verfahren nach Anspruch 11, wobei das Verfahren ferner Folgendes umfasst:
Empfangen, durch die Netzwerkvorrichtung, zweiter Anzeigeinformationen, wobei die zweiten Anzeigeinformationen dazu verwendet werden, die Endgerätvorrichtung anzuweisen, den ersten TB in dem ersten Bandbreitenteil zu übertragen und den zweiten TB in dem zweiten Bandbreitenteil zu übertragen.

13. Computerlesbares Speichermedium, das eine Anweisung umfasst, wobei, wenn die Anweisung auf einem Computer ausgeführt wird, dem Computer ermöglicht wird, das Verfahren nach einem der Ansprüche 1 bis 12 durchzuführen.

14. Computerprogrammprodukt, wobei, wenn das Computerprogrammprodukt auf einem Computer ausgeführt wird, dem Computer ermöglicht wird, das Verfahren nach einem der Ansprüche 1 bis 12 durchzuführen.

## Revendications

1. Procédé de communication, comprenant :
la réception (701), par un dispositif terminal, de premières informations d'indication, dans lequel les premières informations d'indication sont utilisées pour indiquer M parties de bande passante situées dans une cellule qui sont configurées pour un dispositif terminal, N des M parties de bande passante sont actives dans la même période, les M parties de bande passante sont associées à N groupes de parties de bande passante, les N groupes de parties de bande passante sont associés à N entités HARQ, et différents groupes de parties de bande passante dans les N groupes de parties de bande passante sont associés à différentes entités HARQ, dans lequel M≥2, 2 ≤N≤M, et M et N sont des nombres entiers positifs ; et
la communication (702), par le dispositif terminal, avec un dispositif réseau dans les N parties de bande passante,
**caractérisé en ce que**
les N groupes de parties de bande passante comprennent les M parties de bande passante et au moins l'un des N groupes de parties de bande passante comprend au moins deux parties de bande passante, et chacune des N parties de bande passante actives est située dans un groupe de partie de bande passante différent des N groupes de parties de bande passante.

2. Procédé selon la revendication 1, dans lequel le procédé comprend également :
l'obtention, par le dispositif terminal, d'une valeur maximale P d'une quantité de processus HARQ pris en charge par le dispositif terminal dans une entité HARQ ; et
la détermination, par le dispositif terminal, à partir de P et de la quantité N d'entités HARQ, d'une valeur maximale d'une quantité de processus HARQ pris en charge par le dispositif terminal dans les N parties de bande passante.

3. Procédé selon la revendication 1, dans lequel le procédé comprend également :
l'obtention, par le dispositif terminal, d'une valeur maximale d'une quantité de processus HARQ pris en charge par le dispositif terminal dans les N parties de bande passante.

4. Procédé selon l'une quelconque des revendications 1 à 3, dans lequel les signaux transmis dans au moins deux des N parties de bande passante sont associés à un même TB.

5. Procédé selon l'une quelconque des revendications 1 à 3, dans lequel un signal envoyé dans une première partie de bande passante des N parties de bande passante est associé à un premier TB, un signal envoyé dans une seconde partie de bande passante des N parties de bande passante est associé avec un second TB, et la première partie de bande passante et la seconde partie de bande passante sont différentes.

6. Procédé selon la revendication 5, dans lequel le procédé comprend également :
la réception, par le dispositif terminal, des secondes informations d'indication, dans lequel les secondes informations d'indication sont utilisées pour indiquer au dispositif terminal de transmettre le premier TB dans la première partie de bande passante, et de transmettre le second TB dans la seconde partie de bande passante.

7. Procédé de communication, comprenant :
l'envoi (701), par un dispositif réseau, de premières informations d'indication, dans lequel les premières informations d'indication sont utilisées pour indiquer M parties de bande passante situées dans une cellule qui sont configurées pour un dispositif terminal, N des M parties de bande passante sont actives dans la même période, les M parties de bande passante sont associées à N groupes de parties de bande passante, les N groupes de parties de bande passante sont associés à N entités HARQ, et différents groupes de parties de bande passante dans les N groupes de parties de bande passante sont associés à différentes entités HARQ, dans lequel M≥2, 2 ≤N≤M, et M et N sont des nombres entiers positifs ; et
la communication (702), par le dispositif réseau, avec un dispositif terminal dans les N parties de bande passante,
**caractérisé en ce que**
les N groupes de parties de bande passante comprennent les M parties de bande passante et au moins l'un des N groupes de parties de bande passante comprend au moins deux parties de bande passante, et chacune des N parties de bande passante actives est située dans un groupe de partie de bande passante différent des N groupes de parties de bande passante.

8. Procédé selon la revendication 7, dans lequel le procédé comprend également :
l'envoi, par le dispositif réseau, d'une valeur maximale P d'une quantité de processus HARQ pris en charge par le dispositif terminal dans une entité HARQ.

9. Procédé selon la revendication 7 ou 8, dans lequel le procédé comprend également :
la détermination, par le dispositif réseau, à partir d'une valeur maximale P d'une quantité de processus HARQ pris en charge par le dispositif terminal dans une entité HARQ et de la quantité N d'entités HARQ associées aux N groupes de parties de bande passante, une valeur maximale d'une quantité de processus HARQ pris en charge par le dispositif terminal dans les N parties de bande passante ; et
l'envoi, par le dispositif réseau, de la valeur maximale de la quantité de processus HARQ pris en charge par le dispositif terminal dans les N parties de bande passante.

10. Procédé selon l'une quelconque des revendications 7 à 9, dans lequel les signaux transmis dans au moins deux des N parties de bande passante sont associés à un même TB.

11. Procédé selon l'une quelconque des revendications 7 à 9, dans lequel un signal envoyé dans une première partie de bande passante des N parties de bande passante est associé à un premier TB, un signal envoyé dans une seconde partie de bande passante des N parties de bande passante est associé avec un second TB, et la première partie de bande passante et la seconde partie de bande passante sont différentes.

12. Procédé selon la revendication 11, dans lequel le procédé comprend également :
la réception, par le dispositif réseau, des secondes informations d'indication, dans lequel les secondes informations d'indication sont utilisées pour indiquer au dispositif terminal de transmettre le premier TB dans la première partie de bande passante, et de transmettre le second TB dans la seconde partie de bande passante.

13. Support de stockage lisible par ordinateur, comprenant une instruction, dans lequel, lorsque l'instruction est exécutée sur un ordinateur, l'ordinateur est activé pour mettre en oeuvre le procédé selon l'une quelconque des revendications 1 à 12.

14. Produit de programme informatique, dans lequel lorsque le produit de programme informatique est exécuté sur un ordinateur, l'ordinateur est activé pour mettre en oeuvre le procédé selon l'une quelconque des revendications 1 à 12.
